(19) Europäisches Patentamt
European Patent Office
Office européen des brevets

(11) **EP 3 398 846 B1**

(12) **EUROPEAN PATENT SPECIFICATION**

(45) Date of publication and mention
of the grant of the patent:
**03.06.2026 Bulletin 2026/23**

(21) Application number: **18169753.3**

(22) Date of filing: **27.04.2018**

(51) International Patent Classification (IPC):
**B62M 25/08** (2006.01)    **H04B 3/00** (2006.01)
**H04B 3/54** (2006.01)    **G08C 15/00** (2006.01)

(52) Cooperative Patent Classification (CPC):
**B62M 25/08; G08C 15/00; H04B 3/548**

(54) **MANUAL CONTROL DEVICE FOR A BICYCLE, BICYCLE ELECTRONIC SYSTEM COMPRISING IT AND CONFIGURATION METHODS THEREOF, AS WELL AS BICYCLE DERAILLEUR**

MANUELLE STEUERUNGSVORRICHTUNG FÜR EIN FAHRRAD, ELEKTRONISCHES FAHRRADSYSTEM DAMIT UND KONFIGURATIONSVERFAHREN DAFÜR SOWIE FAHRRADKETTENSCHALTUNG

DISPOSITIF DE COMMANDE MANUEL POUR BICYCLETTE, SYSTÈME ÉLECTRONIQUE DE BICYCLETTE LE COMPRENANT ET SES PROCÉDÉS DE CONFIGURATION AINSI QUE DÉRAILLEUR DE BICYCLETTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.05.2017 IT 201700048414**

(43) Date of publication of application:
**07.11.2018 Bulletin 2018/45**

(73) Proprietor: **Campagnolo S.r.l.**
**36100 Vicenza (VI) (IT)**

(72) Inventors:
• **GIACOMETTI, Nicola**
**I-36020 Campiglia dei Berici (VI) (IT)**

• **MAISTRELLO, Mirko**
**I-36031 Dueville (VI) (IT)**
• **BORTOLOZZO, Gianluca**
**I-30014 Cavarzere (VE) (IT)**

(74) Representative: **Studio Torta S.p.A.**
**Viale Appiani, 26**
**31100 Treviso (IT)**

(56) References cited:
**US-A1- 2007 167 086    US-A1- 2009 102 628**
**US-A1- 2015 073 656    US-A1- 2015 137 591**
**US-A1- 2016 185 421**

**Description**

The present invention relates to a bicycle on-board electronic system and a configuration method thereof.

The subject-matter disclosed herein relates, more in general, to a manual control device for a bicycle as well as to a bicycle electronic system comprising it and to some configuration methods thereof. Moreover, the subject-matter disclosed herein relates to a bicycle derailleur.

The subject-matter disclosed herein relates more specifically to a manual control device for a bicycle for issuing at least one electrical-electronic command to at least one piece of equipment of the bicycle, such as in particular an electromechanical derailleur or a cycle computer.

In the present description and in the attached claims, the expression "manual control device for a bicycle for issuing at least one electrical-electronic command" should not be taken in the limiting sense to exclude that the manual control device can also issue one or more mechanical commands. In the present description and in the attached claims, under the expression "manual control device for a bicycle for issuing at least one electrical-electronic command" or briefly "manual control device" or even only "control device" reference is thus made to a manual control device capable of issuing one or more electrical-electronic commands - besides possible mechanical commands - to one or more pieces of electrical-electronic and/or mechanical and/or pneumatic equipment of the bicycle, such as a derailleur, a brake, a cycle-computer, and similar.

Known control devices for a bicycle comprise one or more manual actuation members, of the lever type, namely rigid bodies actuated with a rotary movement about a pivot or fulcrum, or of the button type, namely actuated with a linear movement, which manual actuation members are actuatable with one finger or with plural fingers. Typically, the manual actuation members are supported by a body adapted to be fixed to the bicycle, typically at a grip portion of the handlebars.

The number, type, shape and position of manual control devices in a bicycle can change according to the needs, in particular based on the number and type of controlled pieces of equipment provided in the bicycle.

In greater detail, a bicycle typically comprises a rear brake associated with the rear wheel and/or a front brake associated with the front wheel, which are controlled by suitable control devices. The manual actuation member associated with a brake typically comprises a brake lever hinged onto the support body to actuate the brake by the traction of an inextensible cable, usually sheathed (Bowden cable), when it is pulled towards the handlebars.

Moreover, a motion transmission system in a bicycle comprises a chain extending between toothed wheels associated with the axle of the pedal cranks and with the hub of the rear wheel. When there is more than one toothed wheel at at least one of the axle of the pedal cranks and the hub of the rear wheel, and the motion transmission system is therefore provided with a gearshift, a front derailleur and/or a rear derailleur is provided for.

Manual actuation members can be provided to issue a command to increase the gear ratio and a command to reduce the gear ratio, control electronics that suitably drives the front and/or rear derailleur to actuate each command being provided for.

Alternatively, one or more manual actuation members can be provided for to issue a displacement command in one direction and a displacement command in an opposite direction of each derailleur that is present.

In a typical configuration, a manual control device of the front derailleur and a manual control device of the rear derailleur - or only one of the two in the case of simpler gearshifts - are mounted so as to be easily manoeuvred by the cyclist, usually on the handlebars, close to the handgrips thereof where the brake lever for controlling the brake of the front and rear wheel, respectively, is also located. Such integrated manual control devices comprise, in particular, a brake lever, a first gearshift lever and a second gearshift lever.

Specialized speed racing handlebars are also known, which have two or four bars or ends facing prominently forwards, which allow the cyclist to maintain a position of the torso greatly inclined forwards, which is aerodynamically efficient. With these handlebars, specific control devices are also used, both for the brakes and for the gearshift; these devices are commonly called bar-end since they are indeed housed at the ends of the handlebars, so that the cyclist can actuate them easily without having to change his/her position.

Manual control devices are also known in which a single lever is capable of rotating about two or three axes to perform two or three functions - typically the brake control lever function, the upward gearshifting control lever function and/or the downward gearshifting control lever function - as well as manual control devices in which a single lever is capable of rotating in opposite directions and/or by different angles to input different commands, and/or in which different commands are associated with actuation of a manual actuation member for different timeframes or according to different modes.

Therefore, the number, type, shape and position of the manual actuation members in a same manual control device can also change based on requirements and/or functionalities.

The present invention applies to all types of manual control devices described above and in principle to any manual device suitable for issuing one or more electrical-electronic commands to one or more pieces of equipment of the bicycle, such as a derailleurs, suspensions, lighting systems, satellite navigators, training devices, anti-theft devices, cycle-computers capable of providing information on the state of the bicycle, of the cyclist and/or of the route, etcetera.

In order to issue the electrical-electronic commands, on the manual control devices at least one actuation detector is provided for, which detects the position of one or more manual actuation members and/or its/their change of position over time, typically between a rest position and at least one operating position.

The type of actuation detector depends on the features of the associated manual actuation member.

In some cases, the actuation detector is an electric switch, for example of the microswitch type, including a deformable dome-shaped diaphragm. In order to switch the switch, an actuation head fixed to the respective manual actuation member faces the deformable diaphragm in the rest condition of the manual actuation member, and acts by pushing on the deformable diaphragm in the actuation condition of the manual actuation member.

In other cases, it can be a magnetic sensor which cooperates with at least one element made of paramagnetic/ferromagnetic material moved by the respective manual actuation member, or an optical sensor, etcetera. Detectors of this kind are described in US 9, 056, 651 B2.

In certain cases, the manual control device comprises only, from the electrical and electronic point of view, the aforementioned actuation detectors.

Other known manual control devices are, on the other hand, provided with even rather complex on-board electronics. The on-board electronics of the manual control device can also comprise, for example, in addition to the aforementioned actuation detectors of the manual actuation members, components for processing the signals generated by the actuation detectors, and/or electronics for communicating with the controlled piece of equipment and/or with other components of the bicycle electronic system of which the manual control device and the controlled piece of equipment are part, for example electronics for communicating with a control station that receives the commands generated by all the manual control devices of the electronic system and routes them to the various controlled pieces of equipment.

The communication electronics is typically configured to emit a unique identification signal, which allows the unique identification of the single control device in the network of the bicycle electronic system. For example, such a unique identification signal is described in DE 202013100453 U1, as far as such document can be best understood.

Document US 2009/0102628 A1 discloses a bicycle control system comprising: a switch device including a switch operation member, a sensor arranged relative to the switch operation member to detect operation of the switch operation member, a processing unit operatively coupled to the sensor and a transmitter arranged to transmit an output signal; and a cycle computer including a receiver arranged to receive the output signal from the transmitter of the switch device, the processing unit of the switch device including an identification code generating member that generates an identification code related to identification of the switch device, an operating signal generating member that generates an operation code indicative of operation of the switch operation member, and an output member that combines the identification code and the operation code as the output signal to be transmitted by the transmitter of the switch device.

Document US 2015/073656 A1 discloses a bicycle component control apparatus comprising: a communication interface configured to communicate with at least one electric bicycle component and at least one manually operated input member; a controller electrically coupled to the communication interface, and programmed to control the at least one electric bicycle component based on operation of the at least one manually operated input member, the controller being programmed to decide an operation mode of the at least one electric bicycle component differently based on a number of manually operated input member coupled to the controller via the communication interface.

Document EP 2818394 A1, corresponding to US 2015/0006043 to the same Applicant describes an electronically servo-assisted bicycle gearshift, comprising a derailleur and control electronics to drive the derailleur in accordance with a table of command values, wherein the derailleur is configured to emit a derailleur model identification signal and the control electronics is configured to receive the derailleur model identification signal and, if it has an available table of command values suitable for the derailleur model, to use it to drive the derailleur, if not, to prevent the actuation of the derailleur. In this way, a derailleur is prevented from being actuated by reference to unsuitable command values, which could lead not only to temporary failure with possible worsening of performance, but also to damage of the mechanics.

Such document teaches more specifically that the bicycle electronic system or gearshift can be capable of discerning for example among four types or models of derailleur, even having tables of command values - or set of parameters, better described hereinafter - enabled only for some of these types or models of derailleur; this opportunity can be exploited for example by loading, into each bicycle electronic system, sets of parameters enabled for all the pre-existing and current types of derailleur from a certain factory, and by enabling the recognition also of models which are planned to be produced at a later time.

However, the Applicant has recognized that making a new model of derailleur is not always the optimal solution for a certain manufacturer in order to cope with other modifications in the equipment components of a bicycle. The Applicant has perceived that there are cases in which it would be useful being capable of differentiating the sets of drive parameters of a same derailleur, so that this actually behaves like a new model of derailleur.

In particular, the Applicant has recognized that when a bicycle is equipped with a disc brake on the rear wheel, the assembly of toothed wheels associated with the hub of the rear wheel or cogset is necessarily shifted along the direction of the axis of the hub with respect to a bicycle equipped with a different type of brake, and consequently also the assembly of toothed wheels associated with the axle of the pedal crank or crankset is necessarily shifted, in order to prevent the motion transmission chain from being arranged too slanted with respect to the axes of the toothed wheels themselves. In these cases, despite being capable of providing for specific derailleurs, it is possible to use the same derailleurs, by simply changing the sets of drive parameters. The on-board electronic system, in particular the electronic gearshift, must moreover recognize which crankset and/or cogset is/are mounted, or how it is/they are mounted, or more specifically which set of control parameters of the derailleur(s) should be used. Indeed, the actuation of a derailleur by reference to unsuitable command values can result not only in temporary failure with possible worsening of performance, but also in a damage of the mechanics.

The technical problem at the basis of the present invention is to allow such recognition, and in particular to allow it in a simple manner.

The present invention relates to a bicycle on-board electronic system and a configuration method thereof according to the independent claims. Further features of the bicycle on-board electronic system are set forth in the dependent claims.

In one aspect, the invention relates to a bicycle on-board electronic system comprising i.a. a bicycle manual control device configured to issue at least one electrical-electronic command to at least one piece of bicycle equipment, comprises a support body and at least one manual actuation member supported in a movable manner by the support body, and comprises an emitter or generator of a signal of identification of a model of the manual control device .

In the present description and in the attached claims, under "signal of identification of a model of the manual control device", sometimes briefly "model identification signal", a signal emitted identical by all the manual control devices of a certain model or type, and emitted different by possible manual control devices of the aforementioned kind, but of a different model, is meant to be indicated. In particular, the model identification signal is different from a unique identification signal of the single manual control device, such as in particular an identification signal in a network, and it is also different from a signal that can distinguish a manual control device from a different component of a bicycle electronic system.

The above manual control device is therefore a self-identifying manual control device.

In the present description and in the attached claims, under "self-identifying", the capability of the manual control device of making itself recognized with respect to analogous, but not identical, manual control devices is meant to be indicated.

Through the provision indicated above, the controlled piece of equipment and/or the bicycle electronic system of which the manual control device is part is/are capable of distinguishing between a manual control device that is capable of emitting the model identification signal and a manual control device that is not, as well as possibly between two or more models of manual control devices, and, for example, configuring itself/themselves accordingly.

In particular, when a certain model of manual control device is associated with a certain assembly of toothed wheels and/or with a certain derailleur with which the bicycle is equipped, through the aforementioned provision it is possible to solve the problem outlined above of recognizing how to correctly drive the derailleur itself.

Specifically, the Applicant has recognized that it is more harmful to drive a derailleur as if the crankset or cogset were further from the longitudinal median plane of the bicycle than it actually is than the opposite, namely that - the other variables concerned being the same - it is more harmful to drive a derailleur as if the bicycle were equipped with a disc brake when it is not, than to drive it as if the bicycle were not equipped with a disc brake while, on the contrary, it is.

It should be noted that, even though thus far in the technical field the need for a manual control device to be capable of making its own model known has never been felt, given that such a manual control device should typically always emit the same simple commands (typically, in the case of an electronic gearshift, at most an upward gearshifting request signal, a downward gearshifting request signal and a *mode* signal), and consequently the manual control devices have been thus far interchangeable (and interchangeability has thus far been considered advantageous), nevertheless a manual control device as disclosed herein can also have other advantageous applications besides the one described above. For example, an application of a manual control device as disclosed herein analogous to the aforementioned one may result in case the bicycle is equipped with one or two electromagnetic brakes that involve, likewise, a displacement of the toothed wheels, and therefore the need to use a yet different set of operating parameters.

According to the invention, the emitter of model identification signal is a microprocessor.

This provision allows model identification signals to be emitted at signal levels compatible with digital signals and directly exploitable by electronics intended for controlling the controlled piece of equipment.

More preferably, the emitter of model identification signal is a programmable microprocessor, even more preferably programmable once only.

This provision allows the model identification signals to be easily differentiated. However, it should be understood that the (re)programming of the microprocessor is carried out in the factory at the time of manufacture of the manual control device, based indeed on its model.

According to the invention, the manual control device is configured to emit said model identification signal and said at least one electrical-electronic command on a common output, at different times.

In this way, the interface of the manual control device with the outside turns out to be advantageously unchanged with respect to a manual control device of the prior art, lacking an emitter of model identification signal.

According to the invention, the manual control device is configured to receive (from the outside) a model interrogation signal, and to emit the model identification signal in response thereto.

According to the invention, the manual control device comprises an actuation detector configured to detect the manual actuation of said at least one manual actuation member and generate said at least one electrical-electronic command in response thereto, in particular configured to detect the position of said at least one manual actuation member and/or the position change thereof over time, typically between a rest position and at least one operating position.

According to the invention, the model interrogation signal modulates a power supply voltage to the manual control device, in particular a power supply voltage of said at least one actuation detector.

Even more preferably, each of said at least one actuation detector is a normally open switch that interrupts a respective line connected to ground, the line being at the power supply voltage.

Preferably, the microprocessor embodying the emitter of the model identification signal is connected between ground and a first one of said lines in parallel to a first one of said actuation detectors, so as to have an output that emits the manual control device model identification signal on said first line.

Preferably, alternatively or in addition, the microprocessor embodying the emitter of the model identification signal comprises a drive input to receive said interrogation signal.

More preferably, the drive input of the microprocessor is connected to a second one of said lines in parallel to a second one of said actuation detectors, so as to receive the interrogation signal on said second line, in particular as a modulation of the power supply voltage as stated above.

Preferably, at least one of said lines is connected to a respective terminal of a connector for interfacing with the outside of the manual control device.

In such manner, the manual control device receives the interrogation signal from the outside and/or transmits the model identification signal to the outside at the terminals of the connector.

In the case of the microprocessor connected in the preferred manner described above, advantageously the configuration of the terminals of the connector is unchanged with respect to that of a manual control device of the prior art, lacking the emitter of model identification signal. It is therefore possible to use the control device as disclosed herein in a bicycle electronic system without any structural modification to other components of the system, only a functional or software modification being necessary. In such way, in a bicycle electronic system, a control device as disclosed herein or a control device according to the prior art can alternatively be connected. The provision of the model identification signal is therefore as "transparent" as possible for the rest of the system, so as to interfere as little as possible with systems which are not configured to recognize the manual control device and to require minimal modifications so as to configure the systems in order to recognize it.

Alternatively, when the manual control device is provided with its own power supply source and/or with control electronics and/or with communication electronics, the emitter of model identification signal can receive an internally generated interrogation signal and/or can generate and/or transmit the model identification signal through the control and/or communication electronics.

Preferably, the model identification signal takes up, over time, at most two values according to a predefined identification pattern, corresponding to the values of said common output in the absence and in the presence of said at least one electrical-electronic command in normal use conditions.

Also this provision allows the model identification signal to be made as "transparent" as possible for the rest of the system, which is already capable of receiving and distinguishing such two values.

Preferably, said predefined identification pattern has a shorter duration than a typical duration of said at least one electrical-electronic command.

Preferably, furthermore, said predefined identification pattern encodes the model of the manual control device according to a code having a length of at least one, preferably of four.

Even more preferably, the microprocessor that embodies the emitter of the model identification signal is configured to emit said signal according to the predefined identification pattern in voltage in response to a voltage drop of its drive input that embodies said interrogation signal.

The bicycle on-board electronic system according to the invention further comprises at least one piece of bicycle equipment and a controller, part of the piece of equipment or distinct therefrom, wherein the controller is configured to receive the model identification signal and select at least one operating parameter of the piece of equipment based on the model identified by said model identification signal.

When it is external to the piece of equipment, the controller can in particular be in an interface unit.

Preferably, the controller is configured to emit an interrogation signal, and the emitter of model identification signal is configured to emit the model identification signal upon receiving the interrogation signal.

Preferably, the at least one piece of equipment is a derailleur, and said at least one operating parameter is a set of operating parameters of the derailleur.

Preferably, the at least one piece of equipment is a front derailleur.

When the controller is internal to the controlled piece of equipment, a particularly innovative piece of equipment is created, which is capable of self-configuring based on the manual control device intended to control it.

When the at least one piece of equipment is a bicycle electromechanical derailleur, and the controller is part of the bicycle electromechanical derailleur, the controller may be configured to carry out the steps of:

- interrogating the manual control device,

- in response thereto, receiving from the manual control device the model identification signal,

- selecting its own set of operating parameters based on the model identified by the model identification signal.

In particular, the bicycle electromechanical derailleur may comprise a controller configured to carry out the steps of:

- interrogating a manual control device,

- if, in response thereto, it receives from the manual control device a model identification signal having a predefined pattern, qualifying the manual control device as a self-identifying manual control device,

- otherwise, qualifying the manual control device as a non-self-identifying manual control device, and

- configuring the derailleur itself differently depending on whether the manual control device is qualified as a self-identifying manual control device or as a non-self-identifying manual control device.

In one aspect, the invention relates to a configuration method of a bicycle electronic system, comprising the steps of:

- interrogating a manual control device,

- if, in response thereto, a model identification signal having a predefined pattern is received from the manual control device, qualifying the manual control device as a self-identifying manual control device,

- otherwise, qualifying the manual control device as a non-self-identifying manual control device, and

- configuring at least one component of the bicycle electronic system differently depending on whether the manual control device is qualified as a self-identifying manual control device or as a non-self-identifying manual control device by selecting a standard set of operating parameters of said at least one component if the manual control device is qualified as non-self-identifying manual control device or a modified set of operating parameters of said at least one component if the manual control device is qualified as self-identifying manual control device.

Preferably, said at least one component of the bicycle electronic system is a derailleur and said configuration step comprises configuring a set of operating parameters of the derailleur.

In this case, when said model identification signal having a predetermined pattern is received from the manual control device, the configuration method may comprise the steps of:

- interrogating a manual control device,

- in response thereto, receiving from the manual control device a model identification signal,

- selecting a set of operating parameters of a derailleur controlled by the manual control device based on a model identified by the model identification signal.

A configuration method of a bicycle electronic gearshift, according to the subject-matter disclosed herein, which is not encompassed by the wording of the claims but is useful for understanding the present invention, comprises the steps of:

- interrogating a manual control device,

- in response thereto, receiving from the manual control device a model identification signal,

- selecting a set of operating parameters of a derailleur controlled by the manual control device based on a model identified by the model identification signal.

Further features and advantages of the present invention will become clearer from the following detailed description of some preferred embodiments thereof, made with reference to the attached drawings. The different features illustrated and described with reference to the single configurations can be combined with each other as desired. In the following description, for the illustration of the figures identical or similar reference numerals are used to indicate structural or functional elements with the same function or analogous function. In the drawings:

- FIG. 1 is a side view of a bicycle comprising an electronic system according to the invention,

- FIG. 2 illustrates some components of the electronic system of FIG. 1,

- FIG. 3 is a block diagram related to an initialization or resetting procedure of the electronic system of FIG.1,

- FIG. 4 is a block diagram related to the operation of the bicycle electronic system 1002 immediately after the initialization or resetting procedure, as well as every time it is switched on,

- FIG. 5 is an electrical diagram of a manual control device according to an embodiment of the invention, connected to an interface unit shown only in part,

- FIG. 6 is an electrical diagram of a manual control device according to the prior art,

- FIG. 7 is a block diagram related to a first embodiment of a recognition procedure of a manual control device, according to the invention,

- FIG. 8 illustrates the time progression of some signals involved in the execution of the procedure of FIG. 7,

- FIG. 9 is a block diagram related to a second embodiment of a recognition procedure of a manual control device, according to the invention, and

- FIG. 10 illustrates the time progression of some signals involved in the execution of the procedure of FIG. 9.

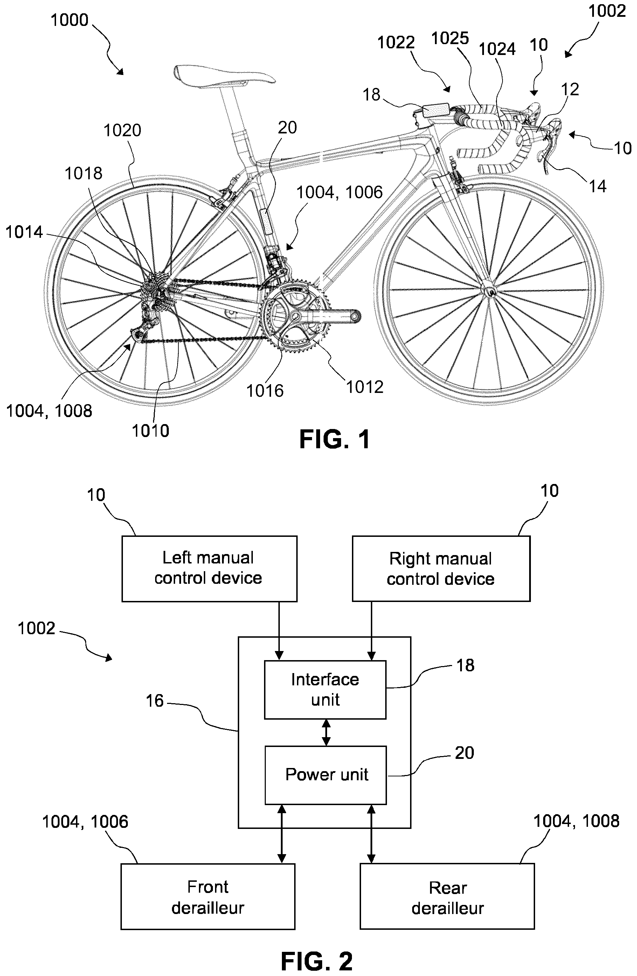

FIG. 1 shows a bicycle 1000 provided with an electronic system 1002, the main components of which are illustrated in the block diagram of FIG. 2.

The electronic system 1002 comprises at least one piece of equipment 1004.

Merely as an example, the electronic system 1002 illustrated is an electronic gearshift 1002 of the bicycle 1000 and comprises in particular two pieces of electromechanical equipment 1004, in this case a front derailleur 1006 and a rear derailleur 1008. Exclusive reference will be made to such a configuration in the rest of the present description. However, it should be understood that the at least one piece of equipment 1004 could be a suspension, a lighting system, a satellite navigator, a training device, an anti-theft device, a cycle-computer capable of providing information on the state of the bicycle, of the cyclist and/or of the route, etcetera.

The front and rear derailleurs 1006, 1008 are part of a motion transmission system of the bicycle 1000, which further comprises a chain 1010 extending between toothed wheels 1012, 1014 associated with the axle of the pedal cranks 1016 and with the hub 1018 of the rear wheel 1020.

More in detail, a motion transmission system of a bicycle 1000 is provided with a gearshift - and, therefore, at least a front derailleur 1006 and/or a rear derailleur 1008 is provided for - when there is an assembly of toothed wheels 1012, 1014 comprising more than one toothed wheel 1012, 1014, as shown in FIG. 1, at at least one of the axle of the pedal cranks 1016 and the hub 1018 of the rear wheel 1020. In more basic systems, only one of the front derailleur 1006 and/or the rear derailleur 1008 can be provided for.

The front derailleur 1006 and/or the rear derailleur 1008 serve the function of displacing the chain 1010 among the toothed wheels 1012, 1014 in order to change the gear ratio of the bicycle 1000.

The actuation of the derailleurs 1006, 1008 takes place based on commands manually input by the cyclist through one or more control devices 10 mounted onto the handlebars 1022 of the bicycle 1000. FIGs. 1 and 2 show in particular two manual control devices 10 each emitting gearshifting request commands addressed, respectively, to the front derailleur 1006 and to the rear derailleur 1008. In the case of interest herein of an electronic gearshift 1002, the gearshifting request commands are electrical-electronic commands, which will sometimes also be referred to as control signals.

Each manual control device 10 comprises a support body 12 configured to be fixed to the bicycle 1000, typically at a handgrip 1024, 1025 of the handlebars 1022 as shown, so as to be easily reached by the cyclist during a travel condition of the bicycle 1000. The inputting of commands by the cyclist takes place through one or more manual actuation members 14, typically in the form of levers, as shown, or buttons, provided on the manual control device 10.

FIG. 1 shows, merely for illustrative purposes, manual control devices 10 configured for handlebars 1022 of the drop bar type, but the manual control devices 10 can have a configuration different from the one shown, so as to also be adapted to different types of handlebars, for example T-bar. Still alternatively, the manual control devices 10 can be of the bar-end type described in the introductory part of the present description.

As an alternative or in addition thereto, it is possible to provide for manual control devices 10 fixed elsewhere on the frame of the bicycle 1000, for example at the attachments of a bottle-holder, close to the seat tube, close to a derailleur 1006, 1008, etcetera.

More in general, the number, type, shape and position of the manual control devices 10 in the bicycle 1000 can change even considerably according to the needs, as described in the introductory part of the present description.

The electronic system 1002 of the bicycle 1000 further comprises control electronics 16.

Control electronics 16 changes the gear ratio based on commands manually input by the cyclist through the control devices 10 and, alternatively or additionally, automatically, for example based on one or more detected variables, such as the travel speed, the cadence of rotation of the pedal cranks, the torque applied to the pedal cranks, the slope of the travel terrain, the heart rate of the cyclist and similar, and/or the gear ratio, as detected by suitable sensors (not shown) part of the electronic system 1002.

In the present description and in the attached claims, under "control electronics" or "controller" a logic unit shall be meant, which can however be formed of plural physical units, in particular of one or more distributed microprocessors that can be contained in one or more casings, which possibly contain other components of the bicycle electronic system.

In the case shown in FIGs. 1 and 2 merely as an example, the control electronics 16 is shown distributed between an interface unit 18 and a power unit 20, separate from one another, but this separation is not essential at all. Furthermore, the control electronics 16 is shown distinct from the manual control devices 10 and from the controlled pieces of equipment 1004 or derailleurs 1004, 1006, but not even such distinction is essential. Alternatively, the functions described below with reference to such interface unit 18 and power unit 20 (and yet other functions, typical of such units) can be performed, as a whole or in part, inside such controlled pieces of equipment 1004 and/or such derailleurs 1004, 1006.

Therefore, in the configuration of the system 1002 having the least number of components, there might be only one manual control device 10 directly in communication with a controlled piece of equipment 1004. This is the case, in particular, when the manual control device 10 is of the wireless type.

Going back to the configuration shown, the interface unit 18 receives the control signals emitted by the manual control devices 10, it possibly compares them and/or combines them with one another and forwards them, unchanged or suitably modified, to the power unit 20, which in turn forwards them to and/or routes them, again unchanged or more typically suitably modified, between the front derailleur 1006 and the rear derailleur 1008.

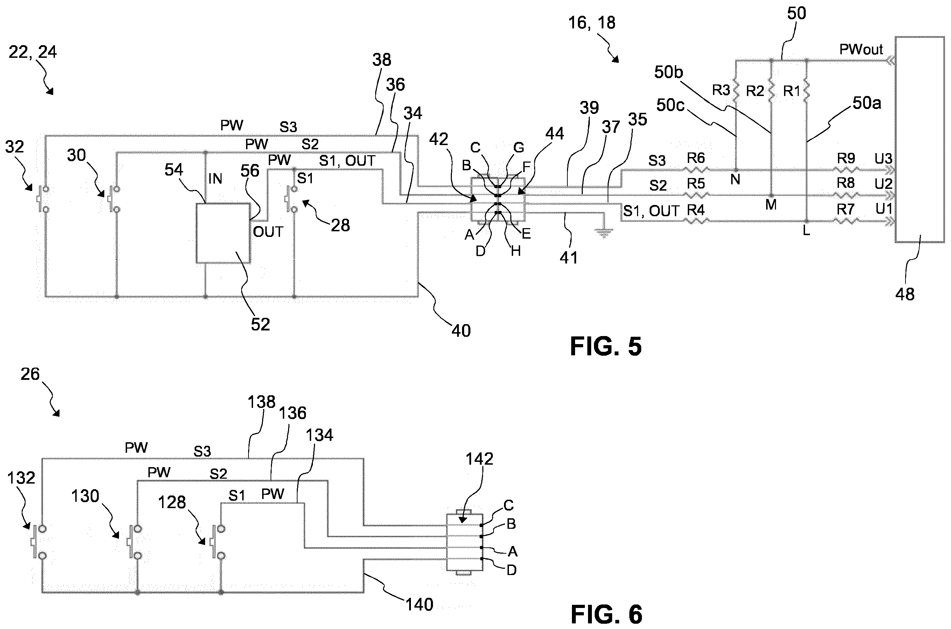

In a practical embodiment, the interface unit 18 comprises a processor (cf. for example the microprocessor 48 of FIG. 5) wherein a firmware is integrated, or in which a suitable software is executed. The interface unit 18 typically further comprises a volatile and/or non-volatile memory unit (not shown), for example of the RAM and/or EEPROM type, and can possibly comprise a user interface additional to that embodied by the manual control devices 10, including a display and/or keys, buttons, levers, a joystick or other command input members, including a touch-screen. As an example, the interface unit 18 is shown in FIG. 1 as fixed to the center of the handlebars 1022.

The power unit 20 is configured to receive from the interface unit 18 the control signals, possibly process them, and generate suitable drive signals for the derailleurs 1006, 1008 or more in general for the controlled pieces of equipment 1004 of the bicycle 1000. The power unit 20 comprises in particular a processor in which a firmware is integrated, or in which a suitable software is executed. The power unit 20 typically further comprises a volatile and/or non-volatile memory unit (not shown), for example of the RAM and/or EEPROM type. Merely as an example, the power unit 20 is shown in FIG. 1 as fixed to the seat tube of the frame of the bicycle 1000.

In particular, the power unit 20 drives the derailleur 1006, 1008 by reference to sets of parameters or values of a table of command values, each correlated to a position of the derailleur in which the engagement of the chain with a specific toothed wheel takes place or there is.

In greater detail, in a manner per se well known in the technical field, each derailleur 1006, 1008 of an electronic gearshift 1002 typically comprises an electromechanical actuator, which displaces a movable element of the derailleur. The electromechanical actuator in turn comprises an electric motor.

In order to drive the actuator, the control electronics 16 and in particular the power unit 20 use a table of values containing, for each toothed wheel 1012, 1014, the value that a variable of the derailleur must take up to position the chain 1010 in engagement with the toothed wheel 1012, 1014. Such value can be a differential value with respect to the adjacent toothed wheel, or it can be an absolute value with respect to a reference, for example with respect to a reference toothed wheel or to an end of stroke condition or to a condition of lack of excitation of the motor.

In terms of magnitude, an actuator command value of the table of values can for example be the distance travelled by a movable point taken as reference on the derailleur, the number of steps or revolutions that the motor should be made to perform, a length of excitation time of the motor, the value of a power supply voltage of a motor having an excursion proportional to the voltage, or furthermore it can be the value emitted by a feedback sensor or transducer associated with the motor (for example a position transducer of the drive shaft), a numerical value stored in a register and representative of one of the aforementioned amounts, etc.

In particular, the motors of the actuators can be driven for a number of steps or for a length of excitation time or with a voltage that are appropriate for each upward or downward gearshifting and then automatically stopped, while the feedback sensors or transducers are used to provide a feedback signal to the control electronics 16 so that it can possibly provide for actuating the motors of the actuators again in case the intended position has not been reached, namely the aforementioned variable of the derailleur 1006, 1008 has not taken up the table value. This may for example be due to the fact that the resistant torque offered by the derailleur, which to a certain extent depends on how the cyclist is pedaling, was too high, greater than the maximum torque that can be delivered by the motors through the linkage of the derailleur itself.

The values of said table of command values are nominal values, set in the factory, which take the number of toothed wheels 1012, 1014 and the respective thicknesses and distances between centers into account.

The table of values must accurately correspond to the electromechanical components of the gearshift, in particular to the absolute positions and/or to the distances between centers of the toothed wheels 1012, 1014, and/or to the mutual position of the elements of the motor or of the linkage of the derailleur 1006, 1008 taken as a fixed reference or as a movable reference, as well as possibly to the progression of the actuation voltage of the motor, to the speed, acceleration and/or direction of rotation of the motor etc.

In other words, the table of values must correspond accurately not only to the particular derailleur, but also to the particular crankset or to the particular cogset mounted onto the bicycle 1000, and to its position with respect to the frame.

As discussed in the introductory part of the present description, even the crankset or cogset being the same, the mounting position on the frame of the toothed wheels 1012, 1014 and therefore the table of command values suitable for the derailleur 1006, 1008 can depend on the type of brake mounted onto the rear wheel 1020.

The actuation of a derailleur 1006, 1008 by reference to unsuitable command values can lead not only to a temporary failure with possible worsening of performance, but also to a damage of the mechanics.

A manual control device 10 configured according to the invention can prevent such unsuitable actuation, among other advantageous applications thereof.

The manual control device 10 is advantageously, according to the invention, a self-identifying manual control device. In order to better distinguish it from a generic manual control device 10, a self-identifying manual control device will be indicated hereinafter with reference numerals 22, 24 corresponding to two different models; a non-self-identifying manual control device will be indicated hereinafter with reference numeral 26. The self-identifying manual control devices 22, 24 are sometimes also indicated as "new", while the non-self-identifying manual control device 26 is sometimes also indicated as pre-existing or "standard" manual control device.

In particular, the self-identifying manual control device 22, 24 is configured to emit a manual control device model identification signal.

The control electronics 16, in particular the interface unit 18, is configured to evaluate whether or not it receives the model identification signal, and consequently establish whether the control device 10 present in the system is a self-identifying control device 22, 24 or not; alternatively or in addition, it can be configured to evaluate the model identified by the model identification signal received, and consequently establish which specific model of control device is present.

Therefore, it is provided to associate manual control devices of different models with different pieces of equipment 1004, in particular with different derailleurs 1006, 1008 and/or with different cranksets or cogsets, and to suitably configure the control electronics 18 of the bicycle electronic system 1002 based on the model of the manual control device 10 which is present in the electronic system 1002, in particular so that it differently controls the pieces of equipment 1004 depending on the manual control device 10 which is present in the electronic system 1002. As discussed in the introductory part of the present description, a particularly useful application is that of distinguishing when the bicycle 1000 is equipped with a disc (or electromagnetic) brake from when it is not, so as to allow a same front derailleur 1006 and/or a same rear derailleur 1008 to be used, which is/are however driven differently by the control electronics 16 in the two cases.

In this way, an innovative configuration method of the electronic system 1002 is created, comprising the following steps:

- interrogating a manual control device 10,

- if, in response thereto, a model identification signal having a predefined pattern is received from the manual control device 10, qualifying the manual control device as a self-identifying manual control device 22, 24,

- otherwise, qualifying the manual control device 10 as a non-self-identifying manual control device 26, and

9

- configuring at least one component of the electronic system 1002 differently depending on whether the manual control device 10 is qualified as a self-identifying manual control device 22, 24 or as a non-self-identifying manual control device 26.

The configuring is performed by selecting a standard set of operating parameters of said at least one component if the manual control device is qualified as non-self-identifying manual control device or a modified set of operating parameters of said at least one component if the manual control device is qualified as self-identifying manual control device.

When the bicycle electronic system is a bicycle electronic gearshift, the method may comprise, when said model identification signal having a predetermined pattern is received from the manual control device, the steps of:

- selecting a set of operating parameters of a derailleur controlled by the manual control device based on a model identified by the model identification signal,

so that the derailleur is controlled differently depending on the model of the manual control device which is present in the electronic system.

In this way a configuration method of an electronic gearshift 1002 is also created, which is not encompassed *per se* by the wording of the claims but is useful for understanding the present invention, comprising the steps of:

- interrogating a manual control device 22, 24,

- in response thereto, receiving from the manual control device 22, 24 a model identification signal,

- selecting a set of operating parameters of a derailleur 1006, 1008 controlled by the manual control device 22, 24 based on a model identified by the model identification signal.

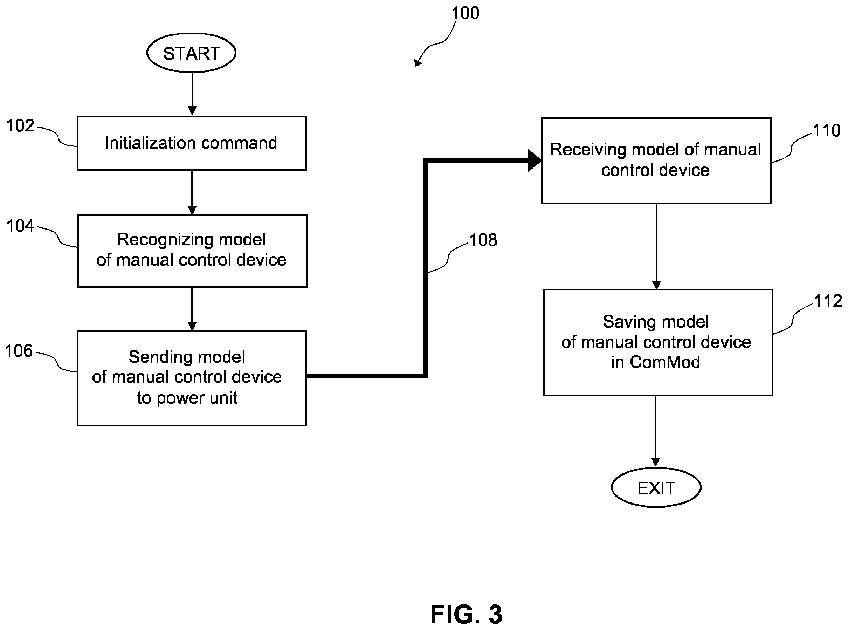

Some embodiments of such configuration methods of the bicycle electronic system 1002 or of steps thereof are better illustrated hereinafter with reference to FIGs. 3-10.

Each of such methods can in particular be implemented directly in control electronics of the piece of equipment 1004, in particular in electronics of the front derailleur 1006 or of the rear derailleur 1008, which can in particular be in direct communication (wired or wireless) with the manual control device 10 intended to control it, thus creating a particularly innovative piece of equipment, which is capable of self-configuring.

A bicycle electromechanical derailleur is therefore created, which is not encompassed *per se* by the wording of the claims but is useful for understanding the present invention, comprising a controller configured to carry out the steps of:

- interrogating a manual control device 10,

- if, in response thereto, it receives from the manual control device 10 a model identification signal having a predefined pattern, qualifying the manual control device as a self-identifying manual control device 22, 24,

- otherwise, qualifying the manual control device 10 as a non-self-identifying manual control device 26, and

- configuring the derailleur 1006, 1008 itself differently depending on whether the manual control device 10 is qualified as a self-identifying manual control device 22, 24 or as a non-self-identifying manual control device 26.

A bicycle electromechanical derailleur is therefore created, which is not encompassed *per se* by the wording of the claims but is useful for understanding the present invention, comprising a controller configured to carry out the steps of:

- interrogating a manual control device,

- in response thereto, receiving from the manual control device a model identification signal,

- selecting its own set of operating parameters based on a model identified by the model identification signal.

FIG. 3 schematically illustrates an initialization or resetting procedure 100 of the bicycle electronic system 1002, under the assumption that the control electronics 16 has the configuration shown in FIG. 2.

In a block 102, the electronic system 1002 receives an initialization or resetting command. Preferably, the initialization or resetting command is received by the control electronics 16 and more preferably by the interface unit 18.

The initialization or resetting command is issued for example through the actuation of a specific or of a certain combination of manual actuation member(s) 14 of the manual control device(s) 10 of the bicycle, or through the actuation of a manual actuation member of the interface unit 18 or of another component of the electronic system 1002, or else it is generated by the insertion of the battery.

Preferably, the initialization or resetting command is issued through simultaneous pressing of the manual actuation members 14 intended for emitting a command of the *mode* type on the two manual control devices 10; the validation of such initialization or resetting command preferably takes place when simultaneous pressing of the two manual actuation members 14 of the *mode* type takes place for a time interval longer than a predetermined minimum threshold, for example than a threshold of 40 ms.

In a subsequent block 104 a model recognition step of the manual control device 10 takes place, wherein as stated above the control electronics 16, in particular the interface unit 18, evaluates whether it receives the model identification signal or not, and consequently establishes whether the control device 10 present in the system is a self-identifying control device 22, 24 or it is, instead, a non-self-identifying control device 26 and/or evaluates the model identified by the model identification signal received and consequently establishes which model of self-identifying control device 22, 24 is present.

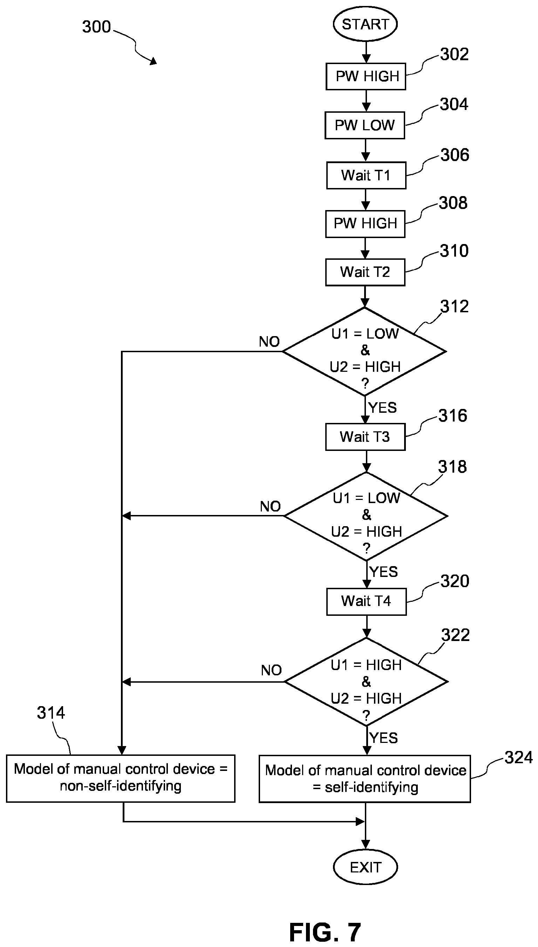

Preferred embodiments of the model recognition step 104 are described hereinafter based on FIGs. 7-10.

In a subsequent block 106, the interface unit 18 sends information 108 representative of the model of manual control device 10 recognized or identified to the power unit 20. Such information can be suitably saved in the non-volatile memory of the interface unit 18, an operation that is not shown.

The information 108 representative of the identified model of manual control device 10 is received by the power unit 20 in a block 110.

In a subsequent block 112, such information 108 is suitably saved in the non-volatile memory of the power unit 20, in particular by assigning a corresponding value to a variable indicated with ComMod; then the execution ends.

In the case in which the control electronics 16 is not distributed between the interface unit 18 and the power unit 20, the steps 106 and 110 can be omitted, the information representative of the identified model of manual control device 10 being directly saved in a non-volatile memory of the control electronics 16.

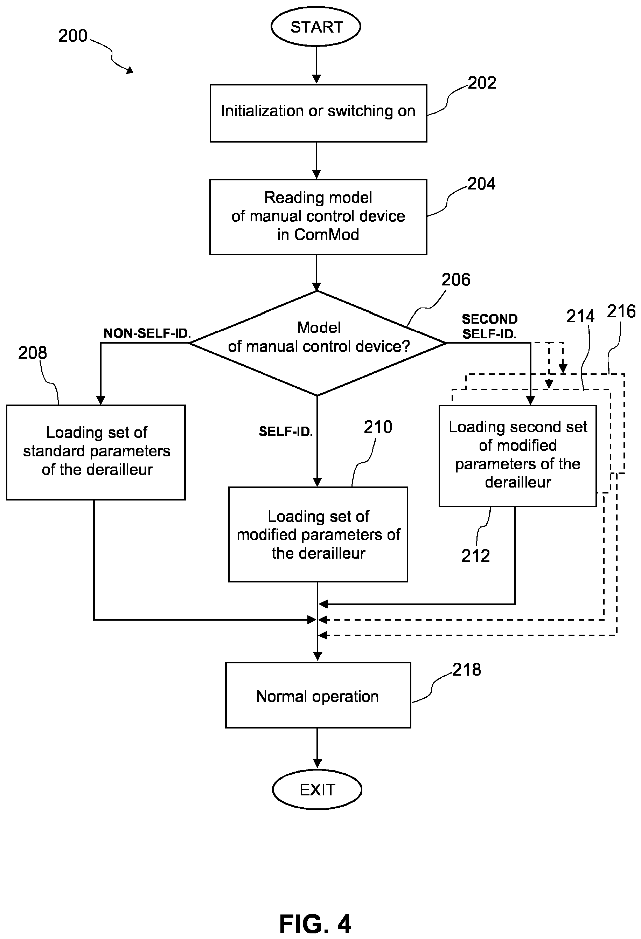

FIG. 4 illustrates a block diagram related to the operation 200 of the bicycle electronic system 1002 immediately after the initialization or resetting procedure described in relation to FIG. 3 and every time the bicycle electronic system 1002 is switched on. The execution of the block diagram illustrated in FIG. 4 takes place in particular in the power unit 20 when the configuration of the control electronics 16 is that shown in FIG. 2.

In a block 202 the aforementioned initialization procedure or the switching on of the system 1002 takes place.

In a subsequent block 204, the information representative of the model of manual control device 10 detected during the recognition step of the block 104 of FIG. 3 is recovered, in particular by reading from the non-volatile memory of the power unit 20 the value of the variable ComMod stored in block 112 described above.

Of course, immediately after the initialization or resetting procedure 100 of FIG. 3, the block 204 of FIG. 4 can be omitted, because the value of the variable ComMod is already available.

In a subsequent block 206 the system 1002 checks which model of manual control device 22, 26, 24 corresponds to the value of the variable ComMod.

If the value of the variable ComMod corresponds to that of the non-self-identifying or standard manual control device 26, in a block 208 the system 1002 sets up for use of the standard set of parameters of the derailleur.

Alternatively, if the value of the variable ComMod corresponds to that of a self-identifying manual control device 22 of a first model, in a block 210 the system sets up for use of a first modified set of parameters of the derailleur.

If the value of the variable ComMod corresponds to that of a self-identifying manual control device 24 of a second model, in a block 212 the system sets up for use of a second modified set of parameters of the derailleur.

The electronic system 1002 could be configured to distinguish only a self-identifying manual control device 22, 24 from a non-self-identifying manual control device 26, the block 212 being absent.

Vice-versa, the electronic system 1002 could be configured to distinguish between more than two self-identifying manual control devices 22, 24: in such case, if the value of the variable ComMod corresponds to that of a self-identifying manual control device 24 of a third, fourth, etc. model, the system sets up for use of a respective modified set of parameters of the derailleur, as schematically illustrated by blocks 214, 216, etc.

Following the execution of any one of blocks 208, 210, 212, 214 and 216, in a block 218 the system 1002 goes to normal operation. Normal operation comprises for example monitoring of possible electrical-electronic commands emitted by the manual control device(s) 10, in particular gearshifting request commands, possibly routed by the interface unit 18, the monitoring of the outputs of possible sensors provided on the bicycle in order to monitor the state of the electronic system 1002 and/or of various physical components of the bicycle 1000 and/or of the conditions of the cyclist, the evaluation of the current gear ratio in order to decide whether to actuate gearshifting or not, both based on the values of the sensors and upon reception of a gearshifting request command, the suitable driving of the derailleurs 1006, 1008 based on the associated set of parameters and on the received commands, etcetera.

In an alternative embodiment, instead of a single check block 206 a plurality of cascaded check blocks can be provided for, as will be clear to those skilled in the art.

Reference has been made above to a standard set of parameters of the derailleur 1006, 1008 and to one or more modified sets of parameters of the derailleur 1006, 1008 for prompt reference to the case of particular interest described previously, wherein a derailleur 1006, 1008 is used in a modified manner when there is a disc (or electromagnetic) brake and in a standard manner when there is a conventional brake. It should however be understood that in general it is sufficient for the sets of parameters to be distinct from one another.

Furthermore, even more than one model of derailleur 1006, 1008 could be associated with each model of manual control device 22, 24, 26, each model of derailleur having its own sets of operating parameters. In this case, which derailleur is actually mounted onto the bicycle and, therefore, which set of operating parameters should actually be used with each model of manual control device 22, 24, 26 will be established by the electronic system 1002 in a suitable manner, not described any further.

As an example, derailleurs configured to emit a derailleur model identification signal, as described in the aforementioned document EP 2818394 A1, could be used.

FIG. 5 shows an electric diagram or circuit of an embodiment of a self-identifying manual control device 22, 24 according to the invention. FIG. 5 also partially shows the control electronics 16 of the electronic system 1002 connected to the self-identifying manual control device 22, 24. In the configuration of the system of FIG. 2, the components of the control electronics 16 shown in FIG. 5 correspond to an input stage of the interface unit 18.

In particular, the case is represented of a self-identifying manual control device 22, 24 comprising a first manual actuation member associated with an actuation detector 28 and intended for inputting a *mode* type command, a second manual actuation member associated with an actuation detector 30, for sending gearshifting request signals (for example downward), and a third manual actuation member associated with an actuation detector 32, for sending gearshifting request signals in the opposite direction (for example upwards).

The actuation detectors 28, 30, 32 are in this case made as normally open switches, which close when the related manual actuation member is actuated.

Alternatively, one or more of the actuation detectors 28, 30, 32 can be normally closed switches. It is also possible to provide for, instead of the switches, actuation detectors of a different type, like for example sensors, in an "open collector" configuration. The changes to be made to the electrical diagram in the case of a different number or configuration of manual actuation members of the manual control device, and/or of a different type of actuation detectors 28, 30, 32 will be clear to those skilled in the art, in the light of the following description, made with reference to the three normally open switches shown.

In greater detail, in a *per se* known manner, each switch 28, 30, 32 is placed between a respective line 34, 36, 38, kept at a power supply voltage PW, and a ground line 40, so as to ground the line 34, 36, 38 when it is in the temporary closed state - corresponding to the actuation of the associated manual actuation member 14 - and in such way generate a voltage drop on the line 34, 36, 38, which represents an electrical-electronic command issued by the manual control device 22, 24.

The progression over time of the voltage which is present on the line 34, 36, 38 is herein indicated as control signal S1, S2, S3, respectively. The control signals S1, S2, S3 carry the electrical-electronic commands.

In the case shown, the connection between the self-identifying manual control device 22, 24 and the interface unit 18 is of the wired type. More in particular, the lines 34, 36, 38, 40 of the self-identifying manual control device 22, 24 lead to respective terminals A, B, C, D of a connector 42 of the self-identifying manual control device 22, 24, and the interface unit 18 comprises a complementary connector 44, provided with terminals E, F, G, H corresponding to the terminals A, B, C, D, respectively.

In the interface unit 18, the terminal H is connected to ground through a line 41.

In the interface unit 18, furthermore, corresponding lines 35, 37, 39 lead to the terminals E, F, G. The progression over time of the voltage which is present on each line 35, 37, 39 is again indicated as control signal S1, S2, S3, respectively, disregarding possible current leakages/voltage losses across the connectors 42, 44.

The interface unit 18 comprises a controller 48 that receives in input, in a broad sense, the control signals S1, S2, S3, respectively, and evaluates them to detect the electrical-electronic commands carried by them. In the case shown, the controller indeed receives signals U1, U2, U3 derived from the control signals S1, S2, S3 in the manner specified hereinafter.

The controller 48 produces, at a suitable output connected to a power supply line 50, a power supply voltage PWout. The power supply line 50 splits into three branches 50a, 50b, 50c, respectively connected to the lines 35, 37, 39 so as to carry the power supply to the lines 34, 36, 38 of the device. The branches 50a, 50b, 50c and the lines 35, 37, 39 have respective resistors R1, R2, R3 and R4, R5, R6, so that the power supply voltage PW in the manual control device 22, 24 is less than that produced in output from the controller 48. Moreover, when no manual actuation member 14 is actuated and therefore the switches 28, 30, 32 are open, the power supply voltage PWout and the power supply voltage PW correspond to each other in qualitative terms, meaning that although they have different intensities, they have the same variation over time. Where it is not necessary to distinguish between the two, hereinafter reference will be generically made to the power supply voltage PW, PWout, meaning, as far as the manual control device 10 is concerned, the power supply voltage PW when the switches 28, 30, 32 are open.

The inputs of the controller 48 are respectively connected to the nodes L, M, N between the branches 50a, 50b, 50c and the lines 35, 37, 39, preferably through respective resistors R7, R8, R9. Therefore, the resistors R1, R4; R2, R5; R3, R6 embody voltage dividers which perform the aforementioned modification of the control signals S1, S2, S3 into the signals U1, U2, U3 at the input of the controller 48.

Therefore, the state of the actuation detectors or switches 28, 30, 32 makes the respective control signals S1, S2, S3 and, consequently, the signals U1, U2, U3, change. In other words, the logic state of the inputs of the controller 48 of the interface unit 18 depends on the power supply voltage PWout, PW and on the state of the actuation detectors 28, 30, 32.

In particular, due to how the circuit shown is configured, in the normal condition in which a manual actuation member is released, namely when the respective switch 28, 30, 32 is open, both the control signal S1, S2, S3 and the signal U1, U2, U3 that arrives to the controller 48 have a voltage value associated with a high logic level, hereinafter indicated with HIGH. When, on the other hand, a given manual actuation member is actuated, namely when the respective switch 28, 30, 32 is closed, both the control signal S1, S2, S3 and the signal U1, U2, U3 that arrives to the controller 48 have a voltage value associated with a low logic level, hereinafter indicated with LOW. From the qualitative or logic point of view, the signals U1, U2, U3 therefore correspond to the control signals S1, S2, S3 emitted by the manual control device 22, 24.

The configuration described above of the input stage of the interface unit 18 turns out to be particularly advantageous for the reasons that will be understood hereinafter; however, the power supply signal PWout, PW and the control signals S1, S2, S3 or their version U1, U2, U3 at the input of the controller 48 could follow physical paths which are totally independent from each other.

In what has been illustrated and described up to here, the self-identifying manual control device 22, 24 does not differ from a non-self-identifying manual control device 26. For the sake of completeness, FIG. 6 shows an electrical diagram related to such a non-self-identifying manual control device 26, wherein elements corresponding to those of FIG. 5 are identified with the same reference numeral, increased by 100. The power supply signal PWout, PW and the control signals S1, S2, S3 are identified with the same references.

Advantageously, as shown in FIG. 5, the self-identifying manual control device 22, 24 comprises an emitter 52 of a manual control device model identification signal, briefly emitter 52.

The emitter 52 emits a manual control device model identification signal, in particular during the recognition step of the block 104 of FIG. 3.

In the case shown the emitter 52 is embodied by an integrated circuit or microprocessor 52 that has a drive input 54 and an output 56.

The emitter or microprocessor 52 is configured so as to emit the model identification signal OUT at the output 56 based on the signal IN at the drive input 54. In greater detail, the microprocessor 52 receives an interrogation signal at its drive input 54, namely a modulation of the input signal IN, in particular from the controller 48 of the interface unit 18. Upon receiving such interrogation signal, the microprocessor 52 makes the signal at the output 56 change according to a predefined pattern, as better described hereinafter based on FIGs. 7-10, so as to emit the model identification signal OUT.

In greater detail, the microprocessor 52 is connected, regarding the output, between the ground line 40 and the line 34 in parallel to the actuation detector 28 (more precisely, it is connected between the ground line 40 and a point of the line 34 downstream of the actuation detector 28), so as to emit the model identification signal OUT on line 34. In this way, the self-identifying manual control device 22, 24 is configured to emit the manual control device model identification signal OUT and the electrical-electronic command, in this case the *mode* type command, on the common output corresponding to the terminal A of the connector 42, at different times. At the output A the control signal S1 or the manual control device model identification signal OUT is therefore alternatively present; the same at the input of the controller 48 of the interface unit 18 as signal U1. A possible simultaneous presence of the two signals S1, OUT is managed in the manner that will be clear hereinafter.

The microprocessor 52 is further connected, regarding the input, between the ground line 40 and the line 36 in parallel to another actuation detector, in the case shown to the actuation detector 30, so as to receive the interrogation signal on the line 36. In this way the modulation of the input signal IN of the microprocessor 52 advantageously is a modulation of the power supply voltage PW to the self-identifying manual control device 22, 24. The input signal IN of the microprocessor 52 further depends, in the configuration shown, on the state of the actuation detector 30.

With reference to FIG. 7 an embodiment of a recognition method 300 of a manual control device 10 is now described, which recognizes whether the manual control device 10 connected in the system 1002 is a self-identifying manual control device 22, 24 or a non-self-identifying manual control device 26. In particular such recognition method 300 is carried out in block 104 of FIG. 3.

The recognition method 300 exploits a first embodiment of model identification signal OUT of manual control device 22 according to a predefined pattern ID.

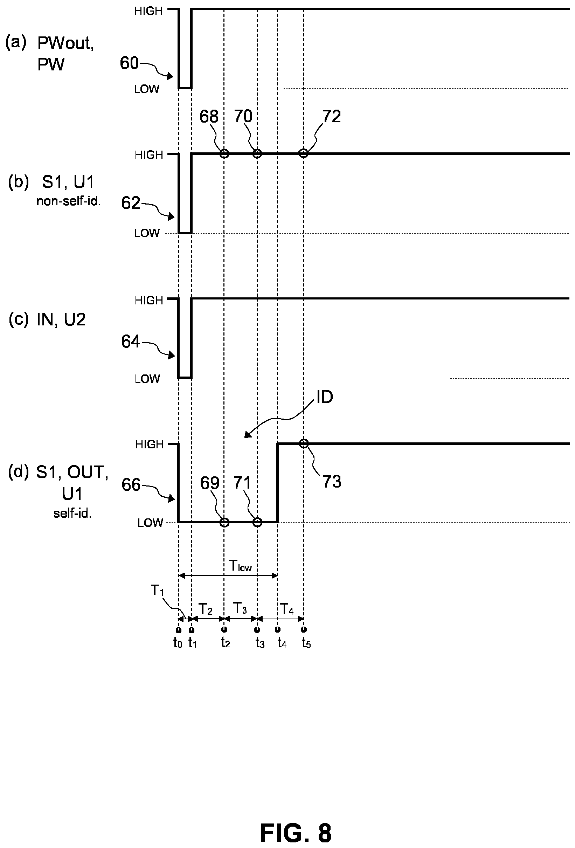

In order to facilitate the understanding of such recognition method 300, FIG. 8 illustrates the time progression of the main signals involved in its execution. In particular there are shown:

- in (a) the time progression of the power supply signal PWout, PW emitted by the controller 48 of the interface unit 18 and carried to the lines 34, 36, 38 or 134, 136, 138 respectively;

- in (b) the time progression of the signal U1 at the input of the controller 48 of the interface unit 18 in the case of the non-self-identifying or standard manual control device 26 of FIG. 6;

- in (c) the time progression of the input signal IN of the microprocessor 52 and of the signal U2 at the input of the controller 48 in the case of the self-identifying manual control device 22 of FIG. 5; and

- in (d) the time progression of the signal U1 at the input of the controller 48 of the interface unit 18, in the case of the self-identifying manual control device 22.

As noted above, the signal U1 at the input of the controller 48 qualitatively corresponds to the control signal S1 at the output of the manual control device 22, 24.

In a block 302 of FIG. 7, the signal PW is kept HIGH by the controller 48 of the interface unit 18, as during the normal operation of the manual control device 10.

In a subsequent block 304, the signal PW is set to LOW by the controller 48 of the interface unit 18, and keeps such value for a time interval T1, the elapsing of which is suitably monitored in a block 306. The signal PW is thus set again to HIGH by the controller 48 in a subsequent block 308.

The execution of blocks 302-308 of FIG. 7, in which the controller 48 causes a voltage drop in the power supply signal PW, corresponds to the appearance of a negative rectangular pulse 60 in the signal PW, comprised between instants t0 and t1 and with a duration T1, as shown in the graph (a) in FIG. 8. It should be understood that the squared progression represented by the rectangular pulse 60, as in the subsequent figures, is ideal and in practice the signals can have a non-squared progression.

The signal S1 or U1, respectively, related to a standard or non-self-identifying manual control device 26, therefore lacking the emitter 52 of model identification signal OUT, follows the variation in the power supply signal PW, under the assumption that the actuation detector 128 is in the normal open state. Also in FIG. 8, graph (b), it can indeed be observed, in the progression of the signal S1 or U1, the appearance of a negative rectangular pulse 62 between the instants t0 and t1 and with a duration T1, analogous to the rectangular pulse 60.

In the case of a self-identifying manual control device 22, 24, on the other hand, the voltage drop at the pulse 60 represents the aforementioned interrogation signal for the emitter 52 of model identification signal OUT. Indeed, under the assumption that the actuation detector 30 is in the normal open state, also the input signal IN of the emitter 52 follows the variation of the power supply signal PW and therefore has, as shown in FIG. 8, graph (c), a negative rectangular pulse 64 comprised between instants t0 and t1 and with a duration T1, analogous to the rectangular pulses 60, 62.

In response to such variation in the input signal IN or interrogation signal, the microprocessor 52 emits the manual control device model identification signal OUT at its output signal OUT, which, under the assumption that the actuation detector 28 is in the normal open state, replaces - or prevails over - the control signal S1 at the output of the manual control device and arrives at the input of the controller 48 of the interface unit 18 as signal U1.

The graph (d) of FIG. 8 shows the signal S1 or U1, respectively, of the self-identifying manual control device 22. In this exemplary case, the microprocessor 52 sets the voltage at its output 56 to LOW for a predetermined time interval Tlow. The manual control device model identification signal OUT therefore follows an identification pattern ID which comprises a negative rectangular pulse 66 between instants t0 and t4, with a duration Tlow. The rectangular pulse 66 is followed by a return to the HIGH value of the signal S1 or U1, respectively, again under the assumption that the actuation detector 28 is in the normal open state.

In particular, in the case shown the identification pattern ID starts at the falling edge of the power supply signal PW and input signal IN of the microprocessor 52. The identification pattern ID could however also be very different from that shown, for example it could have a different shape, or it could start at different instants with respect to the variations of the signals IN and PW, for example at the rising edge (instant t1) of such signals, etcetera.

Going back to FIG. 7, in a subsequent block 310 a time interval T2 is preferably waited for.

In a block 312 the system 1002 carries out a double check on the signals U1 and U2 at the input of the controller 48, in particular it checks whether the signal U1 has a LOW value and whether at the same time the signal U2 has a HIGH value.

The sampling points 68 and 69 at instant t2, graphs (b) and (d) in FIG. 8, correspond to the check of block 312 of FIG. 7. In particular, at instant t2, corresponding to the end of the interval T2, the signal U1 of the non-self-identifying or standard manual control device 26 has a HIGH value, graph (b), while the control signal U1 of the self-identifying manual control device 22, graph (d), has a LOW value.

If therefore the signal U1 has HIGH value, the foreseen emitter 52 is certainly not present and -output NO from block 312- the electronic system 1002, in a block 314, sets to non-self-identifying the model of manual control device. The recognition method 300 ends and the system 1002 goes for example to the execution of block 106 of FIG. 3.

Under the aforementioned assumption that the actuation detectors 30, 130 are in the normal open state, the signal U2 follows the power supply signal PWout, PW and corresponds to the signal IN at the input of the microprocessor 52 depicted in FIG. 8, graph (c). Therefore, under such assumption, the signal U2 is always HIGH, apart from the brief negative pulse 64 between instants t0 and t1 in which it is LOW.

If, on the other hand, the cyclist is actuating the manual actuation member 14 corresponding to the actuation detector 30, 130, the signal U2 turns out to be LOW. This condition is considered a disturbance condition of the recognition procedure.

If therefore the signal U2 has LOW value in the check of block 312, for increased safety the electronic system 1002 carries out the aforementioned block 314 in which it sets the model of manual control device to non-self-identifying.

If, on the other hand, the check of block 312 of FIG. 7 has a positive outcome, it is still possible that in the system 1002 there is a self-identifying manual control device 22. Moreover, a drop of the signal U1 is also compatible with the fact that the cyclist is actuating the manual actuation member 14 corresponding to the actuation detector 28, 128, a condition which is likewise considered a disturbance condition of the recognition procedure. The system 1002 therefore preferably carries out the following further checks.

First, in an optional block 316 a time interval T3 is waited for.

Thereafter, in an optional block 318 the system repeats the double check on the control signals U1 and U2 in an analogous manner to block 312, once again checking that U1 has a LOW value and that U2 has a HIGH value.

The optional check of block 318 corresponds to the sampling points 70, 71 at instant t3, graphs (b) and (d) in FIG. 8. In particular, at instant t3 like at the previous instant t2, the signal U1 of the non-self-identifying or standard manual control device 26 has a HIGH value, graph (b), while the control signal U1 of the self-identifying manual control device 22, graph (d), has a LOW value.

For the reasons outlined above, if the outcome of the check is negative, the execution goes to block 314 in which the system ends the recognition considering that a standard or non-self-identifying manual control device 26 is involved, namely by qualifying the manual control device 10 as of the standard or non-self-identifying type.

If the outcome of the check of block 318 is instead positive, in an optional block 320 a time interval T4 is waited.

The time intervals T1 and T2 and, where present, the interval T3, are selected so as to satisfy the following relationship:

$$T1+T2+T3 < Tlow \tag{1}$$

When such a relationship is satisfied, the checks of blocks 312 and 318 are carried out at instants t2 and t3 falling within the pulse with duration Tlow of the identification pattern ID.

For the purpose of recognition of the identification pattern ID it would be sufficient to carry out a single check at an instant falling within the pulse of duration Tlow of the identification pattern ID, in other words only the check of block 312 of FIG. 7. In the embodiment shown two checks are carried out for redundancy, in particular for the purpose of excluding possible false positives due to noise or other interference on the signals. It should be understood that in case the check block 318 is absent, there would be a single waiting block of a suitable duration, instead of the two waiting blocks 316, 320.

Going back to FIG. 7, after waiting for the time interval T4 of the block 320, in a block 322 the system carries out another double check on the signals U1 and U2 at the input of the controller 48 of the interface unit 18, this time by checking whether both the signals U1 and U2 have a value corresponding to the HIGH state.

The check on the signal U2 is carried out for the same reasons outlined above, of aborting - as a matter of fact - a recognition procedure in case the cyclist actuates the manual actuation member 14 corresponding to the actuation detector 30. The check on the signal U1 is intended to check that the previously detected LOW state was due to the rectangular pulse 66 of the recognition signal and not, for example, to the fact that the cyclist is actuating the manual actuation member 14 corresponding to the actuation detector 28. Concerning this, it should be specified that the microprocessor 52 is capable of generating a pulse of much shorter duration than the duration of a manual actuation.

Therefore, if the check of block 322 has a negative outcome, the execution goes to the aforementioned block 314 in which the system 1002 recognizes a standard manual control device 26, not having the certainty that it is a self-identifying manual control device 22.

If, on the other hand, the check of block 322 has a positive outcome, in a block 324 it is established that in the system 1002 there is a self-identifying manual control device 22, and the model of manual control device 10 is set to self-identifying. The method ends and the system 1002 goes, for example, to the execution of block 106 of FIG. 3.

The time interval T4 is selected so as to satisfy the following relationship:

$$T1+T2+T3+T4 > Tlow \qquad (2)$$

Thanks to such relationship, the check of block 322 is carried out at an instant t5 falling when the rectangular pulse 66 of the model identification pattern ID has already expired.

The actual durations of the time intervals T1, T2, T3, T4, Tlow indicated above are suitably selected so as to satisfy the aforementioned relationships (1) and (2); furthermore, the durations are such that the duration Tlow of the model identification ID signal OUT is shorter than the minimum duration of actuation of a manual actuation member by a human being.

As an example, in a practical embodiment, such a duration Tlow is equal to 15 ms, the duration T1 of the rectangular pulses 60, 62, 64 is equal to 2 ms, the waiting intervals T2 and T3 are equal to 5 ms, and the waiting interval T4 is equal to 7 ms.

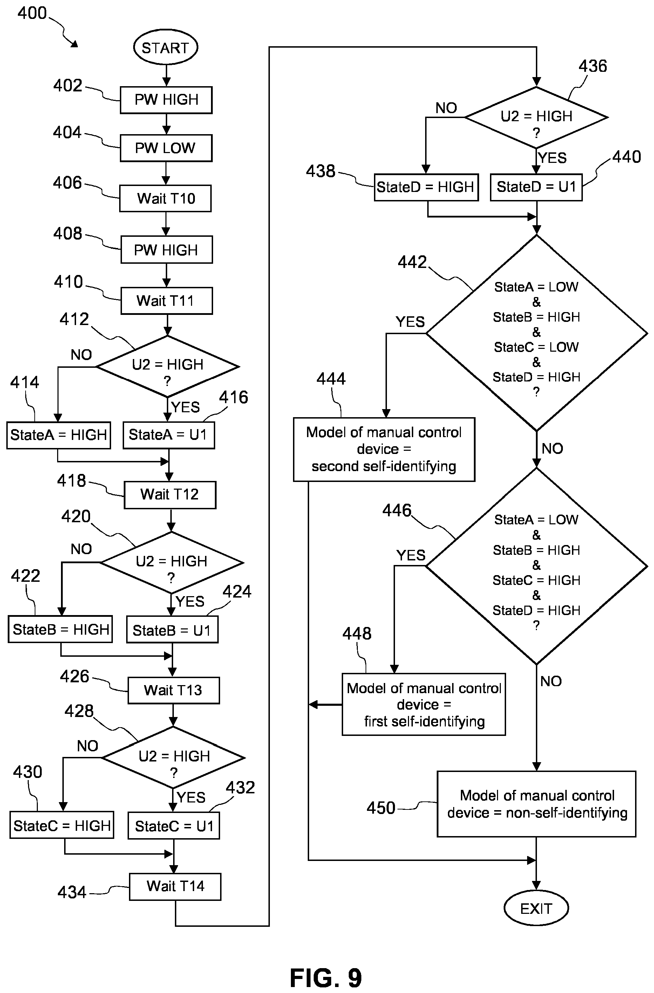

With reference to FIG. 9 an embodiment is now described of a recognition method 400 according to the invention, of a manual control device 10, which recognizes whether the manual control device 10 connected in the system 1002 is a non-self-identifying manual control device 26 or a self-identifying manual control device 22 of a first model or a self-identifying manual control device 24 of a second model. In particular, such a recognition method 400 is carried out for example in the block 104 of FIG. 3.

The recognition method 400 exploits two embodiments of manual control device model identification signal OUT, respectively according to the predefined pattern ID described above for the self-identifying manual control device 22 of the first model, and according to a different predefined pattern ID2 for the self-identifying manual control device 24 of the second model.

The predefined pattern ID2 is generated by the emitter 52 in an analogous manner to the pattern ID through a suitable programming of the microprocessor embodying the emitter 52.

Advantageously, the microprocessor embodying the emitter 52 is programmable, preferably once only, so that at the time of manufacture of the manual control device it is possible to change the identification pattern ID, ID2 that it emits, based indeed on its model.

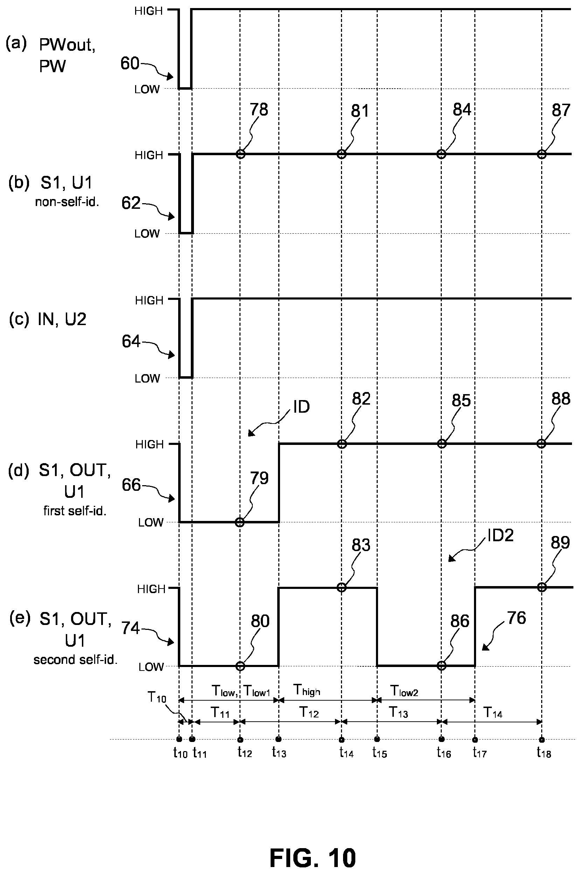

FIG. 10 illustrates the time progression of the main signals involved in the execution of the recognition method 400. In particular there are shown:

- in (a) the time progression of the power supply signal PWout, PW, emitted by the controller 48 of the interface unit 18 and carried to the lines 34, 36, 38 or 134, 136, 138 respectively;

- in (b) the time progression of the signal U1 at the input of the controller 48 of the interface unit 18 in the case of the non-self-identifying or standard manual control device 26 of FIG. 6;

- in (c) the time progression of the signal IN at the input of the microprocessor 52 and of the signal U2 at the input of the controller 48 in the case of the self-identifying manual control device 22 or 24 of FIG. 5;

- in (d) the time progression of the signal U1 at the input of the controller 48 of the interface unit 18, in the case of the self-identifying manual control device 22 of the first model or briefly first self-identifying manual control device 22; and

- in (e) the time progression of the signal U1 at the input of the controller 48 of the interface unit 18, in the case of the self-identifying manual control device 24 of the second model or briefly second self-identifying manual control device 24.

The considerations outlined above with reference to FIGs. 7 and 8 apply *mutatis mutandis,* except for what is outlined hereinafter.

In particular, the time progressions shown in graphs (a), (b), (c) and (d) of FIG. 10 are unchanged with respect to the progressions shown in graphs (a), (b), (c), (d) in FIG. 8, except for the different sampling points shown and discussed below.

Blocks 402 to 410 are unchanged with respect to blocks 302 to 310 of FIG. 7, except that the time intervals waited for in blocks 406 and 410 are indicated with T10, between instants t10 and t11, and T11, between instants t11 and t12, respectively.

In summary, the controller 48 initially causes a voltage drop in the power supply signal PW or negative rectangular pulse 60.

The signal S1 or U1 related to a standard or non-self-identifying manual control device 26 follows such variation, under the assumption that the actuation detector 128 is in the normal open state.

In the case of the two self-identifying manual control devices 22, 24, the voltage drop at the pulse 60 represents the aforementioned interrogation signal for the emitter 52 of model identification signal OUT. The microprocessor 52 of such self-identifying manual control devices 22, 24 emits the respective manual control device model identification signal OUT at its output signal OUT, which, under the assumption that the actuation detector 28 is in the normal open state, replaces - or prevails over - the control signal S1 at the output of the manual control device and arrives at the input of the controller 48 of the interface unit 18 as signal U1.

The signal S1 or U1, respectively, of the first self-identifying manual control device 22 follows the identification pattern ID that comprises the negative rectangular pulse 66 between instants t10 and t13, with duration Tlow; the rectangular pulse 66 is followed by a return to the HIGH value of the signal S1 or U1, respectively, again under the assumption that the actuation detector 28 is in the normal open state.

In graph (e) the signal S1 or U1, respectively, of the second self-identifying manual control device 24 can be seen. In this exemplary case, the microprocessor 52 sets the voltage at its output 56 to LOW for a predetermined time interval Tlow1 between instants t10 and t13; it sets it back to HIGH for a predetermined time interval Thigh between instants t13 and t15; and it sets it back to LOW for a predetermined time interval Tlow2 between instants t15 and t17. Preferably, the timeframes Tlow1, Thigh and Tlow2 are all equal to each other and to the time Tlow relative to the first self-identifying manual control device 22, as shown in FIG. 10.

The model identification signal OUT of the second manual control device 24 therefore follows an identification pattern ID2 that comprises a first negative rectangular pulse 74 and a second negative rectangular pulse 76 separate from one another. Between pulses 74 and 76 and after the pulse 76, there is a return to the HIGH value of the signal S1 or U1, respectively, again under the assumption that the actuation detector 28 is in the normal open state.

Going back to the execution of the recognition method 400 illustrated in FIG. 9, in a block 412 the system 1002 checks whether the signal U2 has a HIGH value.

As explained above, if the cyclist is actuating the manual actuation member 14 corresponding to the actuation detector 30, 130, the signal U2 turns out to be LOW; otherwise the signal U2 is always HIGH, apart from the brief negative pulse 64 between instants t10 and t11 in which it is LOW.

If the check of block 412 of FIG. 9 has a negative outcome, in a block 414 the system sets a first variable, indicated with StateA, to a predetermined convenient value, in the case shown to the HIGH value.

If the check of block 412 of FIG. 9 has a positive outcome, in a block 416 the system sets instead the first variable StateA to the value that the signal U1 takes up at the corresponding instant, namely the instant t12 at the end of the wait T11 of block 410.

The time interval T11 is selected so that the instant t12 falls within the rectangular pulse 66 of the identification pattern ID of the first self-identifying manual control device 22 and within the first rectangular pulse 74 of the identification pattern ID2 of the second self-identifying manual control device 24, namely so as to satisfy the following relationships:

$$T10+T11 < Tlow \qquad\qquad (3)$$

$$T10+T11 < Tlow1 \qquad\qquad (4)$$

The sampling points 78, 79, 80 at instant t12 are shown in graphs (b), (d), (e) in FIG. 10. The signal U1 of the non-self-identifying manual control device 26 has a HIGH value, while both the two control signals U1 of the first and of the second self-identifying manual control device 22, 24 have a LOW value.

Therefore, the first variable StateA takes up different values in the case of a standard manual control device and of a manual control device provided with an emitter 52 of model identification signal OUT.

Moreover, as explained above, the signal U1 would equally be at the LOW value even if the cyclist were actuating the manual actuation member 14 corresponding to the actuation detector 28. In order to avoid a false recognition of a manual control device 10 as of the self-identifying type for this and other reasons, the recognition method 400 provides for further checks.

The check whether the value of the signal U2 is at the HIGH state is repeated three times in respective blocks 420, 428, 436, respectively preceded by waits for time intervals T12 (between instants t12 and t14), T13 (between instants t14 and t16) and T14 (between instants t16 and t18) respectively in blocks 418, 426, 434.

If the check of blocks 420, 428, 436 has a negative outcome, variables StateB, StateC and StateD are set, respectively in blocks 422, 430, 438, to a predetermined convenient value, equal to HIGH, in an analogous manner to what has been described relative to block 414 and to the variable StateA.

If, on the other hand, the check of blocks 420, 428, 436 has a positive outcome, the system, in blocks 424, 432, 440, sets the variables StateB, StateC and StateD to the value that the signal U1 takes up at the corresponding instants, namely at instants t14, t16, t18.

The time interval T12 is selected so that the instant t14 falls after the rectangular pulse 66 of the identification pattern ID of the first self-identifying manual control device 22 and in the interval, with duration equal to Thigh, between the first rectangular pulse 74 and the second rectangular pulse 76 in the identification pattern ID2 of the second self-identifying manual control device 24, so as to satisfy the following relationships:

$$T10+T11+T12 > Tlow \tag{5}$$

$$Tlow1 < T10+T11+T12 < Tlow1+Thigh \tag{6}$$

The time interval T13 is selected so that the instant t16 falls within the second rectangular pulse 76 of the identification pattern ID2 of the second self-identifying manual control device 24, so as to satisfy the following relationship:

$$Tlow1+Thigh<T10+T11+T12+T13<Tlow1+Thigh+Tlow2 \tag{7}$$

Finally, the time interval T14 is selected so that the instant t18 falls after the second rectangular pulse 76 of the identification pattern ID2 of the second self-identifying manual control device 24, so as to satisfy the following relationship:

$$T10+T11+T12+T13+T14 > Tlow1+Thigh+Tlow2 \tag{8}$$

In graphs (b), (d), (e) in FIG. 10 the sampling points 81, 82, 83 at instant t14, the sampling points 84, 85, 86 at instant t16, and the sampling points 87, 88, 89 at instant t18 are shown.

At instant t14 and at instant t18 the signal U1 has a HIGH value independently of the model of manual control device 10 which is present in the system 1002.

At instant t16, on the other hand, the signal U1 of the non-self-identifying manual control device 26 has a HIGH value, the signal U1 of the first self-identifying manual control device 22 is also HIGH, and the signal U1 of the second self-identifying manual control device 24 is LOW.

Therefore, under the assumption that the cyclist is not actuating any manual actuation member 14, the variables StateB and StateD are set to the HIGH value in all of the cases shown, while the variable StateC can take up different values.

The pair of variables StateA and StateC takes up three different values in the case of standard manual control device 26, in the case of first self-identifying manual control device 22 and in the case of second self-identifying manual control device 24.

If the cyclist actuates the manual actuation member 14 corresponding to the actuation detector 28 during the recognition procedure, at least the variable StateD and one or more of the variables StateC, StateB, StateA turns out to be set to LOW independently of the model of manual control device 10 which is present in the system 1002 (since, as stated above, the manual actuation always has a much longer duration than the pulses emitted by the emitter 52).

After the blocks 438, 440 of setting the variable StateD, in a block 442 the system 1002 first checks whether the value of the four variables corresponds to the following combination:

StateA = LOW

StateB = HIGH

StateC = LOW

StateD = HIGH

If the outcome of the check is positive, in a block 444 the system 1002 recognizes the second self-identifying manual control device 24; then the method ends.

If the outcome of the check of block 442 is negative, in a block 446 the system 1002 carries out again a combined check of the values of the four variables, this time by checking whether it corresponds to the following combination:

StateA = LOW

StateB = HIGH

StateC = HIGH

StateD = HIGH

If the outcome of the check is positive, in a block 448 the system 1002 recognizes the first self-identifying manual control device 22, and the method ends.

If the outcome of the check of block 446 is negative, in a block 450 the system 1002 ends the recognition considering that a standard or non-self-identifying manual control device 26 is involved, and the method ends.

The actual durations of the time intervals T10, T11, T12, T13, T14, Tlow, Tlow1, Thigh, Tlow2 indicated above are suitably selected so as to satisfy the aforementioned relationships (3) to (8); furthermore, the durations are such that the overall duration of the model identification signal OUT according to the identification pattern ID, ID2 is shorter than the minimum duration of actuation of a manual actuation member by a human being.

As an example, in a practical embodiment, the durations Tlow, Tlow1, Thigh, Tlow2 are all equal to 15 ms, the duration T10 of the rectangular pulses 60, 62, 64 is equal to 2 ms, the wait interval T11 is equal to 7 ms, and the wait intervals T12, T13, T14 are equal to 15 ms.

The various wait intervals advantageously allow the stabilization of the model identification signal OUT.

At the output from the method, after blocks 444, 448 and 450, the information related to the model of manual control device is in particular sent from the interface unit 18 to the power unit 20, as described above with reference to block 106 of FIG. 3.

The system 1002 is therefore capable of discerning the model of manual control device 10 which is present based on the value of the four variables StateA, StateB, StateC, StateD. In particular, for greater safety the system 1002 qualifies as self-identifying manual control devices 22, 24 only those which emit the model identification signal OUT according to the predetermined pattern ID, ID2, respectively, correlating all of the combinations which are different from those listed above to a standard model.

In a simplified embodiment of the recognition method 400, the variables StateB and StateD could be not provided at all, the corresponding blocks being absent, but the error margin of the system 1002 would be greater.

It should be noted that in the cases illustrated above, the model identification signal OUT takes up, over time, at most two values according to a predefined identification pattern ID, ID2, corresponding to the values that the output A of the manual control device 10 has in the absence and in the presence of the electrical-electronic command input by the cyclist through the manual actuation member 14 corresponding to the actuation detector 28, in the normal use conditions.

This condition is not strictly necessary, even though it is particularly advantageous because it minimizes the necessary changes to the controller 48 of the interface unit 18.

It should be noted that in the case of the first recognition method 300, the predefined identification pattern ID encodes the model of the manual control device 10, 22, 26 according to a code having a length of one - if the check of block 322 is absent - but preferably a length of two.

In the case of the second recognition method 400, the predefined identification pattern ID, ID2 encodes the model of the manual control device 10, 22, 24, 26 according to a code having a length of two if the variables StateB and StateD are absent, of three if the variable StateD is absent, and preferably a length of four.

It should be understood that the signals emitted by the emitters of model identification signal OUT could follow patterns even substantially different from those illustrated by way of example, the changes to be made to the described recognition methods being within the capabilities of those skilled in the art.

In order to avoid interference with the second actuation detector 30, it is possible to provide for a switch dedicated to make the drive voltage of the microprocessor 52 drop, arranged between the branching point from the line 36 and the input 54. Such a switch can be a switch to be actuated with a pinpoint. In this case, the steps outlined above related to the recognition of the identification pattern should take place continuously during normal operation, since the electronics 16 is not aware of when the identification pattern will appear on the line 34, replacing - or prevailing over - the *mode* control signal S1, and in particular does not have the time reference of instant t0.

Alternatively, in the case of a wireless or in any case provided with "intelligence" control device, such a dedicated switch could be a driven switch, of the MOSFET type.

In the case of a control device provided with a power supply source, such as for example a wireless device, such a dedicated switch could be arranged between the input of the emitter 52 and a line carrying the power supply voltage other than the lines 34, 36, 38 interrupted by the actuation detectors. In this way, it would be possible to drive the microprocessor 52 without making the power supply to all three of the actuation detectors 28, 30, 32 drop.

Even more in general, it is not necessary for the power supply voltage PW to be supplied by the same controller 48 that carries out the evaluations on the signals U2, U3.

Although a self-identifying manual control device 22, 24 has been shown, configured to emit the manual control device model identification signal OUT on the output corresponding to the terminal A of the connector 42 in common with the electrical-electronic command of the *mode* type, the electrical-electronic command could be a gearshifting request signal or another electrical-electronic command, also depending on the type of controlled piece of equipment 1004.

It has been assumed, above, that the self-identifying manual control devices of different models had an identical structure, but this is not strictly necessary. In particular, the emitter 52 could be connected in a different manner in the circuit in the case of different models, or even it could be embodied by a different component.

It is worthwhile specifying that in a system configured like in FIG. 2, the block diagrams of FIGs. 7 and 9 are implemented by the interface unit 18, but they could be implemented elsewhere in the control electronics 16 of the system 1002.

In particular, in the case of a wireless manual control device, all of the steps of the blocks diagrams of FIGs. 7 and 9 could be carried out in a controller which is present in the same wireless manual control device.

Vice-versa, some of such steps could be carried out in the power unit 20 or in a controller which is present in the controlled piece of equipment 1004, in particular in the derailleur 1006, 1008. This will be the case in particular when the manual control device 10 is of the wireless type and directly drives the derailleur 1006, 1008, the interface unit 18 and the power unit 20 being absent.

More specifically, the steps that can be carried out remotely are the steps of sending the interrogation signal, corresponding to blocks 302-308, 402-408 and/or the steps of evaluating the various signals, corresponding to blocks 310-324, 410-450, in this case the transmission, from the manual control device 10 to said external controller, of the current value of the various signals in the various sampling instants being suitably provided for.

The self-identifying manual control device 22, 24 could alternatively make the model identification signal OUT continuously available, instead of providing for the emission thereof on a common output A with that of the control signal S1. For example, a line dedicated to the signal OUT in the manual control device 22, 24 could be provided, connected to a respective dedicated line in the input stage of the interface unit 18 or other connected unit, leading to an input of the controller 48 also dedicated only to the signal OUT. In this case, the dedicated lines could be connected to each other for example through additional terminals of the complementary connectors 42, 44 shown in FIG. 5. In this case, however, the self-identifying manual control device 22, 24 would not be totally interchangeable with a non-self-identifying manual control device 26.

The following claims define the scope of protection of the present invention. The shape and/or size and/or position and/or orientation of the various components and/or the sequence of the various steps can be changed. The functions of an element or module can be carried out by two or more components or modules, and vice-versa. Components shown directly connected or in contact can have intermediate structures arranged in between them. Steps shown directly following one another can have intermediate steps carried out between them. The details shown in a figure and/or described with reference to a figure or to an embodiment can apply to other figures or embodiments. Not all of the details shown in a figure or described in the same context must necessarily be present in a same embodiment.

**Claims**

**1.** Bicycle on-board electronic system (1002) comprising:

- at least one manual control device (10, 22, 24) configured to issue at least one electrical-electronic command to at least one piece of bicycle equipment (1004), the manual control device (10, 22, 24) comprising a support body (12) and at least one manual actuation member (14) supported in a movable manner by the support body (12), the at least one manual control device (10, 22, 24) comprising an emitter (52), being a microprocessor, more preferably a microprocessor programmable once only, of a signal of identification of a model of the manual control device (10, 22, 24), defined as a model identification signal (OUT),
- said at least one piece of bicycle equipment (1004) and
- a controller (48), part of the piece of bicycle equipment (1004) or distinct therefrom,
wherein the controller (48) is configured to receive the model identification signal (OUT) and select at least one operating parameter of the piece of bicycle equipment (1004) based on the model identified by said model identification signal (OUT),
wherein the at least one manual control device (10, 22, 24) is configured to receive a model interrogation signal (64), and to emit the model identification signal (OUT) in response thereto,
**characterized in that**
the bicycle on-board system further comprises at least one actuation detector (28, 30, 32) configured to detect the manual actuation of said at least one manual actuation member (14) and generate said at least one electrical-electronic command in response thereto, wherein the model interrogation signal (64) modulates a power supply voltage (PWout, PW) to the manual control device (10, 22, 24), in particular the power supply voltage (PWout, PW) of said at least one actuation detector (28, 30, 32).

**2.** Bicycle on-board electronic system (1002) according to any of the preceding claims, wherein the manual control device (10, 22, 24) is configured to emit said model identification signal (OUT) and said at least one electrical-electronic command on a common output (A), at different times.

3. Bicycle on-board electronic system (1002) according to claim 1, wherein each of said at least one actuation detector (28, 30, 32) is a normally open switch that interrupts a respective line (34, 36, 38) connected to ground (40), the line (34, 36, 38) being at the power supply voltage (PWout, PW).

4. Bicycle on-board electronic system (1002) according to claim 3, wherein a microprocessor embodying the emitter (52) of the model identification signal (OUT) is connected between ground (40) and a first one (34) of said lines (34, 36, 38) in parallel to a first one actuation detector (28) of said at least one actuation detector (28, 30, 32) so as to have an output (56) that emits the model identification signal (OUT) on said first line (34).

5. Bicycle on-board electronic system (1002) according to claim 3 or 4, wherein the microprocessor embodying the emitter (52) of the model identification signal (OUT) comprises a drive input (54) to receive the interrogation signal (64), preferably the drive input (54) of the microprocessor (52) is connected to a second one (36) of said lines (34, 36, 38) in parallel to a second one actuator detector (30) of said at least one actuation detector ( (28, 30, 32), so as to receive the interrogation signal (64) on said second line (36), in particular as a modulation of the power supply voltage (PWout, PW).

6. Bicycle on-board electronic system (1002) according to any of claims 3-5, wherein at least one of said lines (34, 36, 38) is connected to a respective terminal (A, B, C) of a connector (42) for interfacing with the outside of the manual control device (10, 22, 24).

7. Bicycle on-board electronic system (1002) according to any of claims 2 or 3-6 when depending on claim 2, wherein the model identification signal (OUT) takes up, over time, at most two values (LOW, HIGH) according to a predefined identification pattern (ID, ID2), corresponding to the values of said common output (A) in the absence and in the presence of said at least one electrical-electronic command in the normal use conditions.

8. Bicycle on-board electronic system (1002) according to claim 7, wherein said predefined identification pattern (ID, ID2) encodes the model of the manual control device (10, 22, 24) according to a code having a length of at least one, preferably of four, wherein preferably a microprocessor that embodies the emitter (52) of the model identification signal (OUT) is configured to emit said model identification signal (OUT) according to the predefined identification pattern (ID, ID2) in voltage in response to a voltage drop (64) of a drive input (54) thereof, that embodies said interrogation signal (64).

9. Bicycle on-board electronic system (1002) according to claim 1, wherein the controller (48) is configured to emit an interrogation signal (64), and the emitter (52) of model identification signal (OUT) is configured to emit the model identification signal (OUT) upon receiving the interrogation signal (64).

10. Bicycle on-board electronic system (1002) according to any of claims 1-9, wherein the at least one piece of bicycle equipment (1004) is a bicycle electromechanical derailleur (1006, 1008), wherein the controller (48) is part of the bicycle electromechanical derailleur (1006, 1008), and is configured to carry out the steps of:

   - interrogating (202, 204, 206) the manual control device (10, 22, 24),
   - in response thereto, receiving from the manual control device (10, 22, 24) the model identification signal (OUT),
   - selecting (210, 212, 214, 216) its own set of operating parameters based on the model identified by the model identification signal (OUT).

11. Configuration method (200) of a bicycle electronic system (1002) as defined in any of the previous claims, comprising the steps of:

   - interrogating (202, 204, 206) a manual control device (10, 22, 24, 26),
   - if, in response thereto, a model identification signal (OUT) having a predetermined pattern is received from the manual control device (10, 22, 24, 26), qualifying the manual control device (10, 22, 24, 26) as a self-identifying manual control device (10, 22, 24),
   - otherwise, qualifying the manual control device (10, 22, 24, 26) as a non-self-identifying manual control device (10, 26), and
   - configuring (208, 210, 212, 214, 216) at least one component (1004) of the bicycle electronic system (1002) differently depending on whether the manual control device (10, 22, 24, 26) is qualified as a self-identifying manual control device (10, 22, 24) or as a non-self-identifying manual control device (10, 26), by selecting a standard set of operating parameters of said at least one component (1004) if the manual control device (10, 22, 24, 26) is qualified as non-self-identifying manual control device (10, 26) or a modified set of operating parameters of said at least one component (1004) if the manual control device (10, 22, 24, 26) is qualified as self-identifying manual control device (10, 22, 24).

12. Configuration method (200) according to claim 11 wherein said bicycle electronic system (1002) is a bicycle electronic gearshift (1002), comprising, when said model identification signal (OUT) having a predetermined pattern is received from the manual control device (10, 22, 24, 26), the steps of:

- selecting (210, 212, 214, 216) a set of operating parameters of a derailleur (1006, 1008) controlled by the manual control device based on a model identified by the model identification signal (OUT),

so that the derailleur (1006, 1008) is controlled differently depending on the model of the manual control device (10, 22, 24) which is present in the bicycle electronic system (1002).

**Patentansprüche**

1. Elektronisches Bordsystem für ein Fahrrad (1002), umfassend:

- mindestens eine manuelle Steuervorrichtung (10, 22, 24), die dazu eingerichtet ist, mindestens einen elektrisch-elektronischen Befehl an mindestens ein Fahrradgerät (1004) auszugeben, wobei die manuelle Steuervorrichtung (10, 22, 24) einen Trägerkörper (12) und mindestens ein manuelles Betätigungsglied (14) umfasst, das beweglich durch den Trägerkörper (12) getragen ist, wobei die mindestens eine manuelle Steuervorrichtung (10, 22, 24) einen Sender (52), gebildet durch einen Mikroprozessor, vorzugsweise einen nur einmal programmierbaren Mikroprozessor, für ein Signal zur Identifizierung eines Modells der manuellen Steuervorrichtung (10, 22, 24), definiert als Modellidentifikationssignal (OUT), umfasst;
- das mindestens eine Fahrradgerät (1004); und
- eine Steuerung (48), die Teil des Fahrradgeräts (1004) ist oder davon getrennt ist,
wobei die Steuerung (48) dazu eingerichtet ist, das Modellidentifikationssignal (OUT) zu empfangen und mindestens einen Betriebsparameter des Fahrradgeräts (1004) auf der Grundlage des durch das Modellidentifikationssignal (OUT) identifizierten Modells auszuwählen,
wobei die mindestens eine manuelle Steuervorrichtung (10, 22, 24) dazu eingerichtet ist, ein Modellabfragesignal (64) zu empfangen und als Reaktion darauf das Modellidentifikationssignal (OUT) auszugeben,
**dadurch gekennzeichnet, dass**
das elektronische Bordsystem für ein Fahrrad ferner mindestens einen Betätigungsdetektor (28, 30, 32) umfasst, der dazu eingerichtet ist, die manuelle Betätigung des mindestens einen manuellen Betätigungsglieds (14) zu erfassen und als Reaktion darauf den mindestens einen elektrisch-elektronischen Befehl zu erzeugen, wobei das Modellabfragesignal (64) eine Versorgungsspannung (PWout, PW) der manuellen Steuervorrichtung (10, 22, 24), insbesondere die Versorgungsspannung (PWout, PW) des mindestens einen Betätigungsdetektors (28, 30, 32), moduliert.

2. Elektronisches Bordsystem für ein Fahrrad (1002) nach einem der vorhergehenden Ansprüche, wobei die manuelle Steuervorrichtung (10, 22, 24) dazu eingerichtet ist, das Modellidentifikationssignal (OUT) und den mindestens einen elektrisch-elektronischen Befehl zu unterschiedlichen Zeitpunkten an einem gemeinsamen Ausgang (A) auszugeben.

3. Elektronisches Bordsystem für ein Fahrrad (1002) nach Anspruch 1, wobei jeder des mindestens einen Betätigungsdetektors (28, 30, 32) ein normalerweise offener Schalter ist, der eine jeweilige mit Masse (40) verbundene Leitung (34, 36, 38) unterbricht, wobei die Leitung (34, 36, 38) auf der Versorgungsspannung (PWout, PW) liegt.

4. Elektronisches Bordsystem für ein Fahrrad (1002) nach Anspruch 3, wobei ein Mikroprozessor, der den Sender (52) des Modellidentifikationssignals (OUT) bildet, zwischen Masse (40) und eine erste (34) der Leitungen (34, 36, 38) parallel zu einem ersten Betätigungsdetektor (28) des mindestens einen Betätigungsdetektors (28, 30, 32) geschaltet ist, so dass er einen Ausgang (56) aufweist, der das Modellidentifikationssignal (OUT) auf der ersten Leitung (34) ausgibt.

5. Elektronisches Bordsystem für ein Fahrrad (1002) nach Anspruch 3 oder 4, wobei der Mikroprozessor, der den Sender (52) des Modellidentifikationssignals (OUT) bildet, einen Steuereingang (54) zum Empfangen des Abfragesignals (64) umfasst, wobei vorzugsweise der Steuereingang (54) des Mikroprozessors (52) an eine zweite (36) der Leitungen (34, 36, 38) parallel zu einem zweiten Betätigungsdetektor (30) des mindestens einen Betätigungsdetektors (28, 30, 32) angeschlossen ist, um das Abfragesignal (64) auf der zweiten Leitung (36), insbesondere als Modulation der Versorgungsspannung (PWout, PW), zu empfangen.

6. Elektronisches Bordsystem für ein Fahrrad (1002) nach einem der Ansprüche 3 bis 5, wobei mindestens eine der Leitungen (34, 36, 38) mit einem jeweiligen Anschluss (A, B, C) eines Verbinders (42) zum Verbinden mit dem Äußeren der manuellen Steuervorrichtung (10, 22, 24) verbunden ist.

7. Elektronisches Bordsystem für ein Fahrrad (1002) nach einem der Ansprüche 2 oder 3 bis 6, sofern diese auf Anspruch 2 rückbezogen sind, wobei das Modellidentifikationssignal (OUT) im Zeitverlauf höchstens zwei Werte (LOW, HIGH) gemäß einem vorbestimmten Identifikationsmuster (ID, ID2) annimmt, die den Werten des gemeinsamen Ausgangs (A) in Abwesenheit und in Anwesenheit des mindestens einen elektrisch-elektronischen Befehls unter normalen Betriebsbedingungen entsprechen.

8. Elektronisches Bordsystem für ein Fahrrad (1002) nach Anspruch 7, wobei das vorbestimmte Identifikationsmuster (ID, ID2) das Modell der manuellen Steuervorrichtung (10, 22, 24) gemäß einem Code mit einer Länge von mindestens eins, vorzugsweise von vier, codiert, wobei vorzugsweise ein Mikroprozessor, der den Sender (52) des Modellidentifikationssignals (OUT) bildet, dazu eingerichtet ist, das Modellidentifikationssignal (OUT) gemäß dem vorbestimmten Identifikationsmuster (ID, ID2) spannungsmäßig als Reaktion auf einen Spannungsabfall (64) an einem Steuereingang (54) desselben, der das Abfragesignal (64) bildet, auszugeben.

9. Elektronisches Bordsystem für ein Fahrrad (1002) nach Anspruch 1, wobei die Steuerung (48) dazu eingerichtet ist, ein Abfragesignal (64) auszugeben, und der Sender (52) des Modellidentifikationssignals (OUT) dazu eingerichtet ist, das Modellidentifikationssignal (OUT) bei Empfang des Abfragesignals (64) auszugeben.

10. Elektronisches Bordsystem für ein Fahrrad (1002) nach einem der Ansprüche 1 bis 9, wobei das mindestens eine Fahrradgerät (1004) ein elektromechanisches Fahrradschaltwerk (1006, 1008) ist, wobei die Steuerung (48) Teil des elektromechanischen Fahrradschaltwerks (1006, 1008) ist und dazu eingerichtet ist, die folgenden Schritte auszuführen:

- Abfragen (202, 204, 206) der manuellen Steuervorrichtung (10, 22, 24);
- Empfangen des Modellidentifikationssignals (OUT) von der manuellen Steuervorrichtung (10, 22, 24) als Reaktion darauf; und
- Auswählen (210, 212, 214, 216) ihres eigenen Satzes von Betriebsparametern auf der Grundlage des durch das Modellidentifikationssignal (OUT) identifizierten Modells.

11. Konfigurationsverfahren (200) eines elektronischen Systems für ein Fahrrad (1002), wie in einem der vorhergehenden Ansprüche definiert, umfassend die Schritte:

- Abfragen (202, 204, 206) einer manuellen Steuervorrichtung (10, 22, 24, 26);
- wenn als Reaktion darauf ein Modellidentifikationssignal (OUT) mit einem vorbestimmten Muster von der manuellen Steuervorrichtung (10, 22, 24, 26) empfangen wird, Qualifizieren der manuellen Steuervorrichtung (10, 22, 24, 26) als selbstidentifizierende manuelle Steuervorrichtung (10, 22, 24);
- andernfalls Qualifizieren der manuellen Steuervorrichtung (10, 22, 24, 26) als nicht selbstidentifizierende manuelle Steuervorrichtung (10, 26); und
- Konfigurieren (208, 210, 212, 214, 216) mindestens einer Komponente (1004) des elektronischen Systems für ein Fahrrad (1002) in unterschiedlicher Weise abhängig davon, ob die manuelle Steuervorrichtung (10, 22, 24, 26) als selbstidentifizierende manuelle Steuervorrichtung (10, 22, 24) oder als nicht selbstidentifizierende manuelle Steuervorrichtung (10, 26) qualifiziert wird, durch Auswahl eines Standardsatzes von Betriebsparametern der mindestens einen Komponente (1004), wenn die manuelle Steuervorrichtung (10, 22, 24, 26) als nicht selbstidentifizierende manuelle Steuervorrichtung (10, 26) qualifiziert wird, oder eines modifizierten Satzes von Betriebsparametern der mindestens einen Komponente (1004), wenn die manuelle Steuervorrichtung (10, 22, 24, 26) als selbstidentifizierende manuelle Steuervorrichtung (10, 22, 24) qualifiziert wird.

12. Konfigurationsverfahren (200) nach Anspruch 11, wobei das elektronische System für ein Fahrrad (1002) eine elektronische Fahrradschaltung (1002) ist, umfassend, wenn das Modellidentifikationssignal (OUT) mit einem vorbestimmten Muster von der manuellen Steuervorrichtung (10, 22, 24, 26) empfangen wird, den Schritt:

- Auswählen (210, 212, 214, 216) eines Satzes von Betriebsparametern eines von der manuellen Steuervorrichtung gesteuerten Schaltwerks (1006, 1008) auf der Grundlage eines durch das Modellidentifikationssignal (OUT) identifizierten Modells,

so dass das Schaltwerk (1006, 1008) in unterschiedlicher Weise in Abhängigkeit von dem Modell der manuellen Steuervorrichtung (10, 22, 24), das in dem elektronischen System für ein Fahrrad (1002) vorhanden ist, gesteuert wird.

**Revendications**

1. Système électronique embarqué pour bicyclette (1002), comprenant :

   - au moins un dispositif de commande manuelle (10, 22, 24), configuré pour émettre au moins une commande électro-électronique à destination d'au moins un équipement de bicyclette (1004), le dispositif de commande manuelle (10, 22, 24) comprenant un corps de support (12) et au moins un organe d'actionnement manuel (14), supporté de manière mobile par le corps de support (12), ledit au moins un dispositif de commande manuelle (10, 22, 24) comprenant un émetteur (52), constitué par un microprocesseur, de préférence un microprocesseur programmable une seule fois, d'un signal d'identification d'un modèle du dispositif de commande manuelle (10, 22, 24), défini comme signal d'identification de modèle (OUT) ;
   - ledit au moins un équipement de bicyclette (1004) ; et
   - un contrôleur (48), faisant partie de l'équipement de bicyclette (1004) ou distinct de celui-ci),
   dans lequel le contrôleur (48) est configuré pour recevoir le signal d'identification de modèle (OUT) et sélectionner au moins un paramètre de fonctionnement de l'équipement de bicyclette (1004) sur la base du modèle identifié par ledit signal d'identification de modèle (OUT),
   dans lequel ledit au moins un dispositif de commande manuelle (10, 22, 24) est configuré pour recevoir un signal d'interrogation de modèle (64), et pour émettre le signal d'identification de modèle (OUT) en réponse à celui-ci,
   **caractérisé en ce que**
   le système électronique embarqué pour bicyclette comprend en outre au moins un détecteur d'actionnement (28, 30, 32), configuré pour détecter l'actionnement manuel dudit au moins un organe d'actionnement manuel (14) et générer ladite au moins une commande électro-électronique en réponse à celui-ci, le signal d'interrogation de modèle (64) modulant une tension d'alimentation (PWout, PW) du dispositif de commande manuelle (10, 22, 24), en particulier la tension d'alimentation (PWout, PW) dudit au moins un détecteur d'actionnement (28, 30, 32).

2. Système électronique embarqué pour bicyclette (1002) selon l'une quelconque des revendications précédentes, dans lequel le dispositif de commande manuelle (10, 22, 24) est configuré pour émettre ledit signal d'identification de modèle (OUT) et ladite au moins une commande électro-électronique sur une sortie commune (A), à des instants différents.

3. Système électronique embarqué pour bicyclette (1002) selon la revendication 1, dans lequel chacun dudit au moins un détecteur d'actionnement (28, 30, 32) est un interrupteur normalement ouvert qui interrompt une ligne respective (34, 36, 38) connectée à la masse (40), la ligne (34, 36, 38) étant à la tension d'alimentation (PWout, PW).

4. Système électronique embarqué pour bicyclette (1002) selon la revendication 3, dans lequel un microprocesseur constituant l'émetteur (52) du signal d'identification de modèle (OUT) est connecté entre la masse (40) et une première (34) desdites lignes (34, 36, 38), en parallèle avec un premier détecteur d'actionnement (28) dudit au moins un détecteur d'actionnement (28, 30, 32), de sorte qu'il présente une sortie (56) qui émet le signal d'identification de modèle (OUT) sur ladite première ligne (34).

5. Système électronique embarqué pour bicyclette (1002) selon la revendication 3 ou 4, dans lequel le microprocesseur constituant l'émetteur (52) du signal d'identification de modèle (OUT) comprend une entrée de commande (54) destinée à recevoir le signal d'interrogation (64), de préférence l'entrée de commande (54) du microprocesseur (52) étant connectée à une deuxième (36) desdites lignes (34, 36, 38), en parallèle avec un deuxième détecteur d'actionnement (30) dudit au moins un détecteur d'actionnement (28, 30, 32), de sorte à recevoir le signal d'interrogation (64) sur ladite deuxième ligne (36), en particulier sous la forme d'une modulation de la tension d'alimentation (PWout, PW).

6. Système électronique embarqué pour bicyclette (1002) selon l'une quelconque des revendications 3 à 5, dans lequel au moins une desdites lignes (34, 36, 38) est connectée à une borne respective (A, B, C) d'un connecteur (42) destiné à l'interfaçage avec l'extérieur du dispositif de commande manuelle (10, 22, 24).

7. Système électronique embarqué pour bicyclette (1002) selon l'une quelconque des revendications 2 ou 3 à 6 lorsqu'elle dépend de la revendication 2, dans lequel le signal d'identification de modèle (OUT) prend, au cours du temps, au plus deux valeurs (LOW, HIGH) selon un motif d'identification prédéfini (ID, ID2), correspondant aux valeurs de ladite sortie commune (A) en l'absence et en présence de ladite au moins une commande électro-électronique dans des conditions normales d'utilisation.

8. Système électronique embarqué pour bicyclette (1002) selon la revendication 7, dans lequel ledit motif d'identification prédéfini (ID, ID2) code le modèle du dispositif de commande manuelle (10, 22, 24) selon un code ayant une longueur d'au moins un, de préférence de quatre, de préférence encore un microprocesseur constituant l'émetteur (52) du signal d'identification de modèle (OUT) étant configuré pour émettre ledit signal d'identification de modèle (OUT) selon le motif d'identification prédéfini (ID, ID2) en tension en réponse à une chute de tension (64) d'une entrée de commande (54) de celui-ci, laquelle constitue ledit signal d'interrogation (64).

9. Système électronique embarqué pour bicyclette (1002) selon la revendication 1, dans lequel le contrôleur (48) est configuré pour émettre un signal d'interrogation (64), et l'émetteur (52) du signal d'identification de modèle (OUT) est configuré pour émettre le signal d'identification de modèle (OUT) lors de la réception du signal d'interrogation (64).

10. Système électronique embarqué pour bicyclette (1002) selon l'une quelconque des revendications 1 à 9, dans lequel ledit au moins un équipement de bicyclette (1004) est un dérailleur électromécanique de bicyclette (1006, 1008), dans lequel le contrôleur (48) fait partie du dérailleur électromécanique de bicyclette (1006, 1008) et est configuré pour exécuter les étapes consistant à :

   - interroger (202, 204, 206) le dispositif de commande manuelle (10, 22, 24) ;
   - recevoir, en réponse, depuis le dispositif de commande manuelle (10, 22, 24), le signal d'identification de modèle (OUT) ; et
   - sélectionner (210, 212, 214, 216) son propre ensemble de paramètres de fonctionnement sur la base du modèle identifié par le signal d'identification de modèle (OUT).

11. Procédé de configuration (200) d'un système électronique de bicyclette (1002) tel que défini dans l'une quelconque des revendications précédentes, comprenant les étapes consistant à :

   - interroger (202, 204, 206) un dispositif de commande manuelle (10, 22, 24, 26) ;
   - si, en réponse à cela, un signal d'identification de modèle (OUT) présentant un motif prédéterminé est reçu depuis le dispositif de commande manuelle (10, 22, 24, 26), qualifier le dispositif de commande manuelle (10, 22, 24, 26) en tant que dispositif de commande manuelle auto-identifiant (10, 22, 24) ;
   - sinon, qualifier le dispositif de commande manuelle (10, 22, 24, 26) en tant que dispositif de commande manuelle non auto-identifiant (10, 26) ; et
   - configurer (208, 210, 212, 214, 216) au moins un composant (1004) du système électronique de bicyclette (1002) différemment selon que le dispositif de commande manuelle (10, 22, 24, 26) est qualifié comme dispositif de commande manuelle auto-identifiant (10, 22, 24) ou comme dispositif de commande manuelle non auto-identifiant (10, 26), par sélection d'un ensemble standard de paramètres de fonctionnement dudit au moins un composant (1004) si le dispositif de commande manuelle (10, 22, 24, 26) est qualifié comme dispositif de commande manuelle non auto-identifiant (10, 26), ou d'un ensemble modifié de paramètres de fonctionnement dudit au moins un composant (1004) si le dispositif de commande manuelle (10, 22, 24, 26) est qualifié comme dispositif de commande manuelle auto-identifiant (10, 22, 24).

12. Procédé de configuration (200) selon la revendication 11, dans lequel ledit système électronique de bicyclette (1002) est un changement de vitesses électronique pour bicyclette (1002), comprenant, lorsque ledit signal d'identification de modèle (OUT) présentant un motif prédéterminé est reçu depuis le dispositif de commande manuelle (10, 22, 24, 26), l'étape consistant à :

   - sélectionner (210, 212, 214, 216) un ensemble de paramètres de fonctionnement d'un dérailleur (1006, 1008) commandé par le dispositif de commande manuelle sur la base d'un modèle identifié par le signal d'identification de modèle (OUT),

de sorte que le dérailleur (1006, 1008) soit commandé différemment selon le modèle du dispositif de commande manuelle (10, 22, 24) présent dans le système électronique de bicyclette (1002).

**FIG. 1**

**FIG. 2**

EP 3 398 846 B1

100

START

102 — Initialization command

104 — Recognizing model
of manual control device

106 — Sending model
of manual control device
to power unit

108

110 — Receiving model of manual
control device

112 — Saving model
of manual control device
in ComMod

EXIT

**FIG. 3**

200

START

202
Initialization or switching on

204
Reading model
of manual control device
in ComMod

206
Model
of manual control device?

NON-SELF-ID.

208
Loading set of
standard parameters
of the derailleur

SELF-ID.

210
Loading set of
modified parameters of
the derailleur

SECOND
SELF-ID.

214  216

Loading second set
of modified
parameters of the
derailleur

212

218
Normal operation

EXIT

**FIG. 4**

**FIG. 5**

**FIG. 6**

EP 3 398 846 B1

FIG. 7

(a) PWout,
    PW

HIGH

60

LOW

68  70        72

HIGH

(b) S1, U1
    non-self-id.

62

LOW

HIGH

(c) IN, U2

64

LOW

ID

HIGH

(d) S1, OUT,
    U1
    self-id.

66        69  71        73

LOW

$T_{low}$

$T_1$

$T_2$  $T_3$  $T_4$

$t_0$ $t_1$  $t_2$  $t_3$ $t_4$ $t_5$

# FIG. 8

**FIG. 9**

**FIG. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9056651 B2
- DE 202013100453 U1
- US 20090102628 A1
- US 2015073656 A1
- EP 2818394 A1
- US 20150006043 A